# FASCICULE DE BREVET EUROPEEN

(11) **EP 4 073 080 B1**
(45) Date de publication et mention de la délivrance du brevet: **11.10.2023**
(21) Numéro de dépôt: 20845174.0
(22) Date de dépôt: 11.12.2020
(51) Int. Cl.: C07F 9/30

(54) **PROCÉDÉ DE PRÉPARATION INDUSTRIELLE DU SEL DISODIQUE DE ((2S)-3-([1,1'-BIPHENYL]-4-YL)-2-((HYDROXY((1R)-1-(((1-(ISOBUTYRYLOXY)ETHOXY)CARBONYL)AMINO)ETHYL)PHOSPHORYL)METHYL)PROPANOYL)-L-ALANINE**
VERFAHREN ZUR INDUSTRIELLEN HERSTELLUNG DES DINATRIUMSALZES VON (2S)-3-([1,1'-BIPHENYL]-4-YL)-2-((HYDROXY((1R)-1-(((1-(ISOBUTYRYLOXY)ETHOXY)CARBONYL)AMINO)ETHYL)PHOSPHORYL)METHYL)PROPANOYL)-L-ALANIN
PROCESS FOR INDUSTRIAL PREPARATION OF THE DISODIUM SALT OF ((2S)-3-([1,1'-BIPHENYL]-4-YL)-2-((HYDROXY((1R)-1-(((1-(ISOBUTYRYLOXY)ETHOXY)CARBONYL)AMINO)ETHYL)PHOSPHORYL)METHYL)PROPANOYL)-L-ALANINE

(30) Priorité: 11.12.2019 FR 1914158
(43) Date de publication de la demande: 19.10.2022
(73) Titulaire: KOS THERAPEUTICS, INC., Raleigh, NC 276090 (US)
(72) Inventeur: PORAS, Hervé, 78450 VILLEPREUX (FR); PRIOUR, Alain, 35000 RENNES (FR); GRACH, Guillaume, 35340 LIFFRE (FR); FANELLI, Roberto, 20021 BOLLATE (IT); ZHAO, Xinjun, DALIAN, Jinzhou Xinqu (CN)
(74) Mandataire: Regimbeau
(86) Numéro de dépôt international: PCT/FR2020/052385
(87) Numéro de publication internationale: WO 2021/116617

(56) Documents cités:
- EP-A1- 2 740 736

## Description

### DOMAINE DE L'INVENTION

La présente invention concerne un nouveau procédé industriel pour la préparation du sel disodique de ((2S)-3-([1,1'-biphenyl]-4-yl)-2-((hydroxy((1R)-1-(((1-(isobutyryloxy)ethoxy) carbonyl)amino)ethyl)phosphoryl)methyl)propanoyl)-L-alanine à partir de (S)-1-phényléthylamine.

### ARRIERE PLAN DE L'INVENTION

Le sel disodique de ((2S)-3-([1,1'-biphenyl]-4-yl)-2-((hydroxy((1R)-1-(((1-(isobutyryloxy) ethoxy)carbonyl)amino)ethyl)phosphoryl)methyl)propanoyl)-L-alanine, désigné composé (I) de formule suivante: 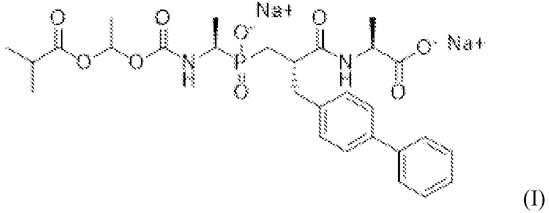 est une pro-drogue de l'acide aminophosphinique ((2S)-3-([1,1'-biphenyl]-4-yl)-2-((((R)-1-aminoethyl)(hydroxy)phosphoryl)methyl)propanoyl)-L-alanine (désigné composé (E) dans la présente description) qui est un inhibiteur double sélectif de l'aminopeptidase neutre (APN) et de la néprilysine (NEP).

Le composé (I) a été décrit comme possédant un effet analgésique important par Bonnard et al. dans Pharmacol. Res. Perspect., 2015, 3(2), e00116.

Le composé (I) et son utilisation comme analgésique ont été décrits pour la première fois dans la demande de brevet WO 2010/010106 et EP2740736 A1.

Le procédé illustré dans cette demande permet la préparation, en 4 étapes de l'acide ((R)-1-(((benzyloxy)carbonyl)amino)ethyl)phosphinique (Exemple 1, étape 3) à partir de chlorydrate de diphénylméthylamine. Cet acide aminophosphinique chiral réagit ensuite avec l'acide 2-([1,1'-biphenyl]-4-ylmethyl)acrylique pour donner, en 6 étapes supplémentaires, le composé (I). Ce procédé de synthèse nécessite notamment une lyophilisation à la dernière étape.

Des aspects techniques spécifiquement liés à la synthèse, en particulier la lyophilisation, le nombre d'équivalents, l'utilisation de certains réactifs difficiles à manipuler et/ou des techniques de purification impliquées dans ce processus, ne permettent pas de transposer la voie de synthèse décrite dans WO2010/010106 à l'échelle industrielle. En particulier :
- une étape de résolution chimique avec de la (R)-méthylbenzyl amine du composé racémique obtenu lors de la 2^{ème} étape du procédé (voir Exemple 1, étape 3), impacte fortement le rendement de cette étape puisque, comme décrit dans la publication de Baylis et al, J. Chem. Soc., Perkin trans. I 1984, p.2846-2853, au moins la moitié du produit est perdue (86% du bon stéréoisomère sont récupérés, représentant 50% du mélange racémique de départ, soit un rendement global d'obtention du bon stéréoisomère de 43% pour cette étape) ;
- une étape de saponification est également réalisée (voir Exemple 3, étape 2). Cette réaction particulière est difficile à mettre en oeuvre à l'échelle industrielle, notamment à cause des quantités importantes d'alcool benzylique générées rendant l'isolation difficile et introduisant la formation d'impuretés importantes ;
- une déprotection en milieu fortement acide (HBr 33% dans l'acide acétique) est nécessaire à la déprotection pour donner le composé présenté dans l'Exemple 3, étape 2. Cette déprotection nécessite des quantités importantes d'acide corrosif difficiles à éliminer ;
- une purification sur colonne de silice pour éliminer le sous-produit (4-nitrophénol) de l'étape 3 et ainsi donner le composé présenté dans l'Exemple 3, étape 3 ;
- la nécessité de déprotéger le composé de l'Exemple 3, étape 4 lors d'une avant-dernière étape pour donner le composé de l'Exemple 4, qui sera ensuite salifier lors de la dernière étape, pour donner le composé (I) ;
- de plus, cette synthèse nécessite d'utiliser comme produit de départ de la diphénylméthylamine qui a un impact très conséquent sur le coût des matières premières.

Un objectif important pour la mise au point d'une synthèse organique à large échelle est de trouver des procédés de synthèse qui soient parfaitement transposables aux conditions industrielles. A cet égard, différents paramètres de la synthèse peuvent être optimisés, comme notamment les solvants, préférablement aussi peu volatiles que possible, afin d'être facilement récupérables ; et les températures utilisées, préférablement dans une plage de température facilement accessible. Il est également avantageux que la purification des différents intermédiaires et produits puissent être réalisée de manière aisée et dans des conditions compatibles à grande échelle. Enfin, les mélanges et les produits des réactions sont, de préférence, isolés et thermiquement stables.

Les bonnes pratiques de fabrication (BPF) ont été définies pour la préparation de produits pharmaceutiques pouvant être administrés à des humains ou à des animaux. Les directives BPF nécessitent une approche de qualité pour la fabrication, permettant ainsi aux entreprises de minimiser ou d'éliminer les cas de contaminations, les confusions et les erreurs.

À la connaissance des inventeurs, aucune méthode industrielle permettant de synthétiser le composé (I) n'a été décrite à ce jour. Par conséquent, il existe un besoin de mettre au point un procédé de synthèse du composé (I) qui puisse être adapté, facilement et efficacement, à l'échelle industrielle, en particulier un procédé dans lequel les solvants toxiques, les chromatographies sur colonne ainsi que la lyophilisation ne soient pas utilisés. De plus, il serait intéressant que ce procédé de synthèse permette de réduire le nombre d'étapes et le coût des matières premières associées.

### EXPOSE DE L'INVENTION

La présente invention se rapporte à un procédé de préparation industrielle du sel disodique de ((2S)-3-([1,1'-biphenyl]-4-yl)-2-((hydroxy((1R)-1-(((1-(isobutyryloxy)ethoxy)carbonyl) amino)ethyl)phosphoryl)methyl)propanoyl)-L-alanine de formule (I) suivante: 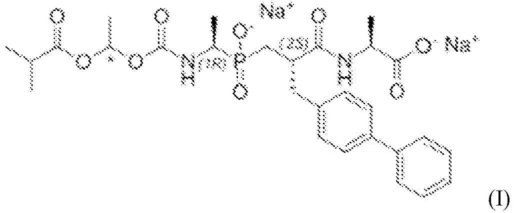 dans laquelle les notations (1R) et (2S) désignent la position des atomes auxquels elles se réfèrent au sein de la molécule ainsi que leur configuration absolue. La notation * indique un carbone chiral.

Le procédé de la présente invention comprend les étapes successives suivantes :
(1) préparation du composé de formule (A) suivante : 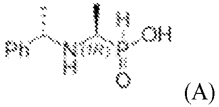 par :
   (1a) réaction de la (S)-1-phényléthylamine dans un solvant polaire et protique avec une solution aqueuse d'acide hypophosphoreux H₃PO₂ et de l'acétaldéhyde en présence d'un équivalent molaire d'acide chlorhydrique, plus ou moins 0,1 équivalent, par rapport à la (S)-1-phényléthylamine, puis
   (1b) traitement du sel résultant de l'étape (1a) avec l'oxyde de propylène, puis
   (1c) cristallisation à l'aide d'un solvant polaire et protique et récupération du composé de formule (A) par filtration,
(2) Préparation du composé de formule (B) suivante : 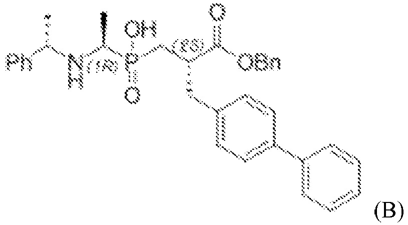 par :
   (2a) réaction du composé de formule (A) issu de l'étape (1) avec l'ester benzylique du (2-(4-biphényl)méthyl)acrylate en présence d'une source de groupements triméthylsilyles, puis
   (2b) récupération du composé de formule (B) par :
      (2b.1) cristallisation à l'aide d'un mélange de solvant aprotique apolaire et d'eau puis filtration, ou
      (2b.2) trituration dans l'acétone, filtration et évaporation du filtrat.
(3) Préparation du composé de formule (C) suivante : 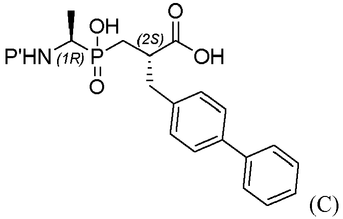 dans laquelle P' est un groupement protecteur de la fonction amine,
   par :
   (3a) hydrogénolyse du composé de formule (B) sous atmosphère d'hydrogène en présence de 10% en poids de Pd/C par rapport au poids du composé de formule (B), puis
   (3b) protection de l'amine résultante de l'étape (3a) avec un groupement protecteur P' et récupération du composé de formule (C),
(4) préparation du composé de formule (E) suivante : 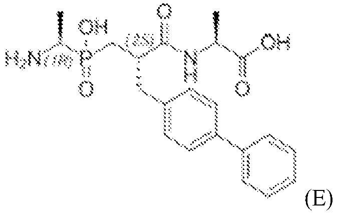 par :
   (4a) couplage peptique du composé de formule (C) avec l'ester tert-butylique de la (L)-alanine et récupération du composé de formule (D) suivante : 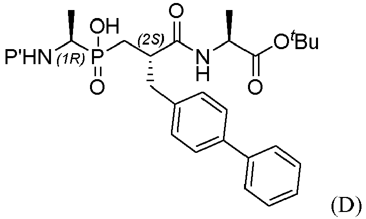
   (4b) déprotection du groupement protecteur P' en position N-terminale et du groupement tert-butyle en position C-terminale et récupération du composé de formule (E),
(5) préparation du composé de formule (F) suivante : 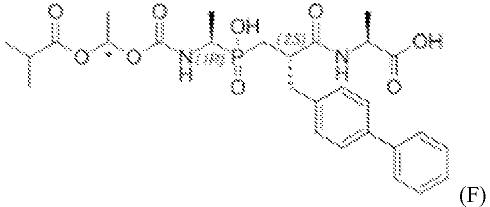 par réaction du composé de formule (E) avec le N-hydroxysuccinimide d'acyloxyalkyle en présence d'une base, puis
(6) récupération du composé de formule (I) par précipitation dans un solvant aprotique apolaire en présence d'un sel sodique de base faible.

Un autre objet de la présente invention se rapporte à un procédé de préparation industrielle de l'acide ((2S)-3-([1,1'-biphenyl]-4-yl)-2-((((1R)-1-aminoethyl)(hydroxy)phosphoryl)methyl) propanoyl)-L-alanine de formule (E) comprenant les étapes successives (1) à (4) telles que définies ci-dessus.

La présente invention porte également sur un procédé d'enrichissement diastéréoisomérique des intermédiaires du procédé de préparation industrielle du composé de formule (E) de la présente invention.

Un autre objet de la présente invention concerne l'intermédiaire de synthèse de formule (B) telle que décrit ci-dessus.

### DESCRIPTION DETAILLEE DE L'INVENTION

Dans la description qui suit, sauf indication contraire, tous les pourcentages sont exprimés en pourcentage molaire.

La présente invention concerne une synthèse multi-étape pour la préparation industrielle de l'acide ((2S)-3-([1,1'-biphenyl]-4-yl)-2-((((1R)-1-aminoethyl)(hydroxy)phosphoryl)methyl) propanoyl)-L-alanine de formule (E) et en outre du sel disodique de ((2S)-3-([1,1'-biphenyl]-4-yl)-2-((hydroxy((1R)-1-(((1-(isobutyryloxy)ethoxy)carbonyl)amino)ethyl)phosphoryl) methyl)propanoyl)-L-alanine de formule (I).

On appelle « première variante de l'invention », la variante selon laquelle la synthèse du composé de formule (B) implique la réalisation de l'étape (2b.1), avantageusement directement à la suite de l'étape (2a). L'étape (2b.2) n'est donc pas réalisée. Selon cette variante, le composé de formule (B) issu de l'étape (2b) possède une pureté optique (2S/2R) supérieure ou égale 95/5. Cet enrichissement énantiomérique est ensuite conservé au cours de chacune des étapes (3) et (4) pour la synthèse des composés (C), (D) et (E). Ainsi, selon cette première variante chacun des composés (B), (C), (D) et (E) correspond au diastéréoisomère tel que représenté dans les formules correspondantes avec un excès diastéréoisomérique strictement supérieur à 95%, plus préférablement supérieur à 99%.

On appelle « seconde variante de l'invention », la variante selon laquelle la synthèse du composé de formule (B) implique la réalisation de l'étape (2b.2) avantageusement directement à la suite de l'étape (2a). L'étape (2b.1) n'est donc pas réalisée. Selon cette variante, le composé de formule (B) issu de l'étape (2b) possède une pureté optique (2S/2R) strictement supérieure à 50/50 et inférieure ou égale à 95/5, notamment comprise entre 51/49 et 60/40. Selon cette seconde variante, des étapes d'enrichissement diastéréoisomérique peuvent être réalisées à la suite de chacune des étapes (3) et (4) afin d'augmenter l'excès diastéréoisomérique de chacun des composés (C) et (E).

Selon la présente invention, sauf indication contraire, les composés (A), (F) et (I) correspondent à l'énantiomère ou diastéréoisomère tel que représenté dans les formules correspondantes avec un excès énantiomérique ou diastéréoisomérique avantageusement strictement supérieur à 95%, plus préférablement supérieur à 99%.

A noter que le terme « excès énantiomérique » ou « excès diastéréoisomérique » est interchangeable avec les termes « pureté optique » et « pureté chirale ». Par « pureté optique (XR/XS) supérieure à Y/Z », on entend, au sens de la présente invention, que l'atome en position X est un centre chiral qui se trouve à Y% sous la forme R et à Z% sous la forme S.

Par « pureté optique XR/XS strictement supérieur à 50/50 » on entend, au sens de la présente invention, que l'énantiomère XR se trouve en proportion strictement supérieure à l'énantiomère XS. Par « acide chlorhydrique concentré » on entend, au sens de la présente invention, une solution aqueuse d'acide chlorhydrique comprenant entre 33% et 37% en masse d'acide chlorhydrique, de préférence il s'agit d'une solution concentrée à 37% en pourcentage massique.

Par « source de groupements triméthylsilyles » on entend, au sens de la présente invention, un composé chimique capable de fournir un ou plusieurs groupements triméthylsilyles (abrégé TMS) de formule -Si(CH₃)₃. En d'autres termes, lorsqu'il réagit avec un autre composé, le composé source de TMS peut transmettre un ou plusieurs groupements TMS audit composé. Ces composés source de TMS sont généralement utilisés comme réactifs pour protéger des groupements fonctionnels tels que des hydroxyles ou des amines avec des groupements TMS. Des exemples de composés sources de TMS sont le *N,O*-Bis(triméthylsilyl)acétamide (BSA), le chlorure de TMS (TMSCl), le triflate de TMS (TMSOTf) et l'hexaméthyldisilazane (HMDS).

Par « température ambiante », on entend au sens de la présente invention, une température comprise entre 15°C et 30°C, de préférence entre 18°C et 25°C.

Le mot « équivalent » dans la présente description désigne un équivalent molaire, sauf indication contraire.

Par « groupement protecteur » on entend, au sens de la présente invention, un groupement qui permet de protéger une fonction chimique réactive contre des réactions indésirables tels que les groupements décrits par T. W. Greene, « Protective Groups In Organic synthesis », (John Wiley & Sons, New York (1981)) et Harrison et al. « Compendium of Synthetic Organic Methods », Vols. 1 à 8 (J. Wiley & sons, 1971 à 1996).

Par « racémisation partielle » on entend, au sens de la présente invention, la transformation d'un énantiomère dit « pur », c'est-à-dire ayant un excès énantiomérique d'au moins 95%, de préférence d'au moins 99%, en un mélange de deux énantiomères du même composé, les deux énantiomères étant en quantités inégales, avec un énantiomère majoritaire par rapport à l'autre, au contraire d'une racémisation totale où les deux énantiomères vont se trouver en quantités identiques (on parle alors d'un mélange racémique).

L'expression « sur le 2^{ème} carbone », dans la présente invention, se réfère au carbone noté en position 2 selon la notation IUPAC tel que représenté dans les formules (B), (C), (D), (E), (F) et (I) ci-dessus, portant le groupement méthyle-biphényle.

Les abbréviations suivantes sont utilisées dans la présente description :
Bn : benzyle,
HPLC : High Performance Liquid Chromatography (chromatograpie liquide haute performance),
TMS : triméthylsilyle,
BSA : *N,O*-bis(triméthylsilyl)acétamide,
TMSOTf : triflate de TMS,
HMDS : hexaméthyldisilazane,
MTBE : méthyl tert-butyle éther,
THF : tétrahydrofurane,
DMF : diméthylformamide,
Boc : tert-butoxycarbonyle,
CBz : benzyloxycarbonyle,
TBTU : tetrafluoroborate de 2-(1H-Benzotriazole-1-yl)-1,1,3,3-tetramethylaminium
HATU : hexafluorophosphate de (diméthylamino)-N,N-diméthyl(3H-[1,2,3]triazolo[4,5-b]pyridin-3 -yloxy)méthaniminium,
BOP : hexafluorophosphate de benzotriazol-1-yloxytris(dimethylamino)phosphonium, PyBOP : hexafluorophosphate de benzotriazol-1-yl-oxytripyrrolidinophosphonium,
HOBt : hydroxybenzotriazole,
DCC : dicyclohexylcarbodiimide
EDC : 1-éthyl-3-(3-diméthylaminopropyl)carbodiimide,
DIPEA : diisopropyléthylamine,
Pd/C : palladium sur charbon.

### Procédé de préparation d'un composé de formule (E)

Un objet de la présente invention se rapporte à un procédé de préparation industrielle de l'acide ((2S)-3-([1,1'-biphenyl]-4-yl)-2-((((R)-1-aminoethyl)(hydroxy)phosphoryl)methyl) propanoyl)-L-alanine de formule (E) suivante : 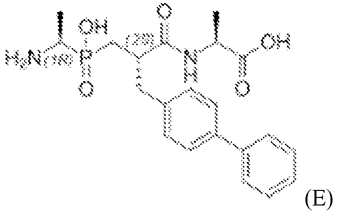 comprenant les étapes suivantes : 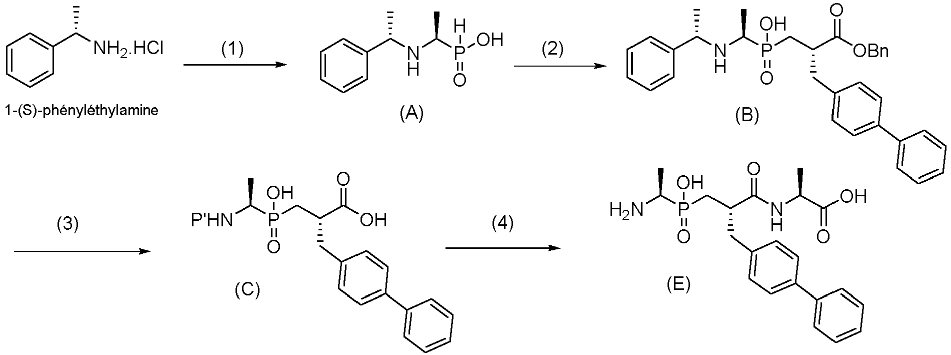
Etape (1) : Synthèse du composé (A) par réaction de la (S)-1-phényléthylamine avec une solution d'acide hypophosphoreux H₃PO₂ et de l'acétaldéhyde en présence d'un équivalent molaire d'acide chlorhydrique concentré puis traitement avec l'oxyde de propylène ;
Etape (2) : Synthèse du composé de formule (B) par réaction du composé de formule (A) avec l'ester benzylique du (2-(4-biphényl)méthyl)acrylate ;
Etape (3) : Synthèse du composé de formule (C) par hydrogénolyse du composé de formule (B) en présence de Pd/C et protection de l'amine résultant avec le groupement P' ;
Etape (4) : Synthèse du composé de formule (E) par couplage peptidique du composé de formule (C) avec l'ester tert-butylique de la (L)-alanine puis déprotection des groupements protecteurs ;

### Etape (1)

Le composé de formule (A) a été cité dans la publication Hamilton et al., Tet. Lett., 1995, 36, 4451-4454, au sein d'une synthèse générale d'acides amino-phosphoniques mais n'a pas été décrit comme exemple dans ladite publication. A la connaissance des inventeurs, le composé de formule (A) n'a donc jamais été caractérisé auparavant. Les auteurs de cette publication indiquent que les conditions de réaction utilisées, pour cet exemple spécifique, « ont donné une solution de couleur sombre à partir de laquelle aucun produit ne pouvait être isolé ». Cette publication décrivait un processus d'hydrolyse-oxydation afin de synthétiser des acides alpha-aminophosphoniques et non aminophosphiniques comme dans la présente demande. Il est également indiqué que l'élimination par hydrogénolyse du groupement protecteur sur la fonction amine de composés organophosphorés pouvait être problématique.

Les inventeurs de la présente invention ont découvert de manière surprenante que l'utilisation d'un équivalent de HCl lors de l'étape (1a) permettait d'éviter la dégradation du mélange réactionnel. La présence d'un équivalent d'HCl, plus ou moins 0,1 équivalent, est un paramètre essentiel pour la synthèse de l'invention. En l'absence de celui-ci, la dégradation est observée.

L'étape (1) du procédé de la présente invention comprend les étapes (1a) à (1c) telles que décrites ci-dessus et dans le schéma suivant.

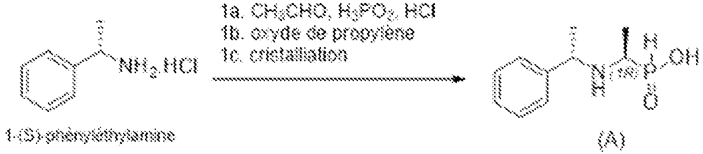

Dans la demande WO2010/010106, le précurseur chiral acide (1R)(1-benzyloxycarbonylamino-éthyl)-phosphinique) destiné à réagir avec l'ester benzylique du (2- (4-biphényl)méthyl)acrylate est obtenu en 4 étapes *via* une résolution de l'acide phosphinique racémique en présence de (R)(+)α-méthylbenzylamine avec un rendement global de 28% (voir Exemple 1). L'étape de résolution par recristallisation du composé racémique en présence de (R)(+)α-méthylbenzylamine est notamment responsable de ce mauvais rendement global puisque par définition, 50% du produit correspondant à l'énantiomère non désiré n'est pas récupéré. De plus, une transposition à l'échelle industrielle de ce type de résolution chirale ne permet pas d'améliorer le rendement.

Dans la présente invention, la chiralité est directement induite en début de synthèse par le réactif de départ, la (S)-1-phényléthylamine dans l'étape (1a). La (S)-1-phényléthylamine utilisée dans la présente invention est un produit commercial (par exemple commercialisée par Sigma-Aldrich) ayant une pureté chirale d'au moins 98%, de préférence 99%. Selon la présente invention, une (S)-1-phényléthylamine ayant une pureté chirale d'au moins 90% peut également être utilisée pour induire la chiralité.

La (S)-1-phényléthylamine réagit avec une solution aqueuse d'acide hypophosphoreux H₃PO₂ et de l'acétaldéhyde anhydre, c'est-à-dire de pureté chimique supérieure ou égale à 99%, en présence d'un équivalent molaire d'acide chlorhydrique par rapport à la quantité de (S)-1-phényléthylamine, dans un solvant polaire et protique.

L'acide chlorhydrique utilisé dans l'étape (1a) correspond avantageusement à une solution aqueuse d'acide chlorhydrique concentré, ce qui permet notamment d'éviter une dilution du milieu réactionnel. De préférence, cette solution d'acide chlorhydrique est concentrée à 37% massique.

Selon un mode de réalisation préféré, le solvant polaire et protique de l'étape (1a) est choisi parmi les alcools tels que le méthanol, l'éthanol, le n-propanol, l'isopropanol, le n-butanol, le tert-butanol et leurs mélanges. De préférence, il s'agit de l'éthanol.

De préférence, l'étape (1a) comprend dans un premier temps l'addition de la solution d'acide chlorhydrique, avantageusement concentré à une solution de (S)-1-phényléthylamine dans le solvant polaire et protique tel que défini ci-dessus puis dans un second temps l'addition de la solution d'acide hypophosphoreux au mélange de (S)-1-phényléthylamine avec l'acide chlohyridrique, et enfin dans un troisième temps, l'addition d'acétaldéhyde anhydre au mélange de (S)-1-phényléthylamine, d'acide chlohyridrique et d'acide hypophosphoreux.

Avantageusement, la solution aqueuse d'acide hypophosphoreux est une solution à 50% massique. Avantageusement, l'acide hypophosphoreux est ajouté dans des quantités comprises entre 1 et 2 équivalents, de préférence entre 1,1 et 1,5 équivalents, plus préférablement à 1,1 équivalent par rapport à la (S)-1-phényléthylamine.

L'acétaldéhyde est de préférence ajouté dans des quantités comprises entre 1 et 2 équivalents, de préférence entre 1,2 et 1,5 équivalent, plus préférablement à 1,2 équivalent par rapport à la (S)-1-phényléthylamine. Typiquement, de l'acétaldéhyde anhydre est utilisé.

Dans un mode de réalisation avantageux, la solution de (S)-1-phényléthylamine se trouve à une température comprise entre -5°C et 5°C, de préférence à 0°C, lors de l'addition de la solution d'acide chlorhydrique concentré et de la solution d'acide hypophosphoreux.

Le milieu réactionnel résultant est agité pendant un temps suffisant pour que la conversion de la (S)-1-phényléthylamine soit supérieure ou égale à 90%. Le suivi de la réaction est notamment assuré par HPLC. De préférence, ce temps est compris entre 1h et 8h, préférablement entre 3h et 6h, plus préférablement entre 3h et 4h. Ladite agitation est avantageusement réalisée à la température d'ébullition du solvant utilisé, plus ou moins 5°C.

L'étape (1a) est de préférence réalisée sous atmosphère inerte, par exemple sous atmosphère d'azote ou d'argon.

Dans l'étape (1b), l'oxyde propylène est ajouté au mélange réactionel résultant de l'étape (1a). Ainsi, l'étape (1b) comprend typiquement les étapes successives suivantes :
(1b.1) ajout de l'oxyde de propylène au mélange réactionnel issu de l'étape (1a) et obtention d'une suspension,
(1b.2) agitation de la suspension issue de l'étape (1b.1),
(1b.3) récupération d'un solide par filtration de la suspension issue de l'étape (1b.2).

L'oxyde de propylène est avantageusement ajouté dans des quantités comprises entre 1 et 4 équivalents, préférablement entre 1,5 et 3 équivalents, plus préférablement à 2 équivalents, par rapport à la (S)-1-phényléthylamine. Cette addition est de préférence réalisée à une température comprise entre 0°C et 15°C, en particulier à 10°C. Le mélange résultant est typiquement agité pendant un temps compris entre 5h et 25h, de préférence, entre 8h et 18h, en particulier entre 10h et 14h, notamment à température ambiante.

Un solide est récupéré par filtration à l'issu de l'étape (1b). Ledit solide est ensuite cristallisé par mise en suspension dans un solvant polaire et protique. Typiquement, il s'agit du même solvant que celui utilisé dans l'étape (1a).

Avantageusement, l'étape de cristallisation (1c) comprend les étapes successives suivantes :
(1c.1) dilution du solide issu de l'étape (1b) dans un solvant polaire et protique,
préférentiellement choisi parmi les alcools tels que le méthanol, l'éthanol, le n-propanol, l'isopropanol, le n-butanol, le tert-butanol et leurs mélanges, avantageusement l'éthanol,
(1c.2) refroidissement du mélange résultant de l'étape (1c.1) à une température comprise entre 10°C et 20°C,
(1c.3) récupération du composé (A) après filtration et séchage, notamment sous vide.

Dans un mode de réalisation particulier, le composé (A) est directement récupéré par filtration à l'issu de l'étape (1b) sans que l'étape (1c) soit nécessaire.

Dans un autre mode de réalisation, l'étape (1c) est optionnellement répétée, notamment une fois.

Dans un autre mode de réalisation particulier, le solide issu de l'étape (1b) est lavé avec un solvant protique et polaire puis séché, notamment sous vide pour donner une première fraction du composé de formule (A). Selon ce mode de réalisation, le filtrat issu de la filtration de l'étape (1b) est concentré, notamment sous vide, pour donner une bouillie humide, qui est elle-même cristallisée selon les étapes (1c.1) à (1c.3) décrites ci-dessus.

Selon la présente invention, le précurseur chiral dérivé d'acide phosphinique destiné à réagir avec l'ester benzylique du (2-(4-biphényl)méthyl)acrylate est obtenu avec un rendement moyen de 38 à 40% en une étape réactionnelle comparé à la méthode décrite dans WO2010/010106 où le précurseur chiral acide (1R)(1-benzyloxycarbonylamino-éthyl)-phosphinique) destiné à réagir avec l'ester benzylique du (2-(4-biphényl)méthyl)acrylate est obtenu après 4 étapes réactionelles avec un rendement global de 28%.

Le composé de formule (A) obtenu à la fin de l'étape (1) a une pureté optique (1R/1S) supérieure à 95/5, préférablement supérieure à 96/4, plus préférablement supérieure à 97/3, encore plus préférablement supérieure à 98/2, encore plus préférablement supérieure à 99/1.

### Etape (2)

L'étape (2) du procédé de la présente invention comprend les étapes (2a) et (2b) telles que décrites ci-dessus et dans le schéma suivant.

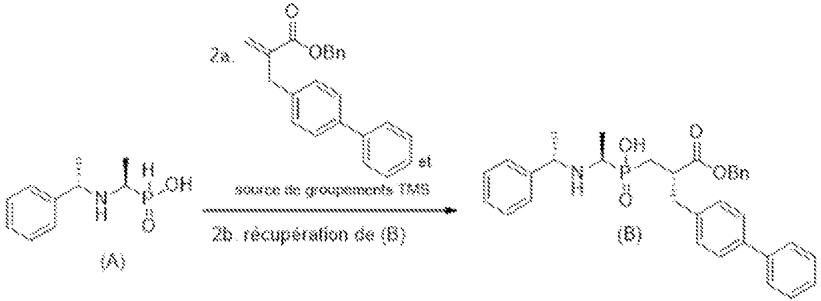

Dans l'étape (2a), le composé de formule (A) issu de l'étape (1) réagit donc avec l'ester benzylique du (2-(4-biphényl)méthyl)acrylate en présence d'une source de groupements triméthylsilyles. Avantageusement, cette source de groupements triméthylsilyles est choisie parmi le *N,O*Bis(triméthylsilyl)acétamide (BSA), le chlorure de TMS (TMSCl), le triflate de TMS (TMSOTf) et l'hexaméthyldisilazane (HMDS), de préférence il s'agit du *N*,*O*-bis(triméthylsilyl)acétamide (BSA). La source de groupements triméthylsilyles permet d'introduire des groupements TMS sur l'amine secondaire et les fonctions hydroxyles du composé de formule (A) afin que l'atome de phosphore soit seul à réagir avec la fonction acrylate de l'ester benzylique du (2-(4-biphényl)méthyl)acrylate.

L'ester benzylique du (2-(4-biphényl)méthyl)acrylate est obtenu selon la méthode décrite dans la demande WO2010/010106 (voir Exemple 2) qui utilise le protocole décrit dans Organic Synthesis Coll. Vol.3 p.337.

De préférence, l'étape (2a) comprend dans un premier temps le mélange du composé de formule (A) avec l'ester benzylique du (2-(4-biphényl)méthyl)acrylate puis dans un second temps l'addition de la source de groupements triméthylsilyles audit mélange.

Avantageusement, la source de groupements triméthylsilyles est ajoutée dans des quantités comprises entre 2 et 6 équivalents, de préférence entre 3 et 4,5 équivalents, plus préférablement à 3,2 équivalents par rapport au composé de formule (A). Selon la présente invention, la quantité de la source de groupements triméthylsilyles, typiquement de BSA, utilisée est donc limitée, ce qui est avantageux en termes de coût et d'élimination des quantités de réactifs n'ayant pas réagit ou d'impuretés générées par de telles quantités, contrairement à la demande WO2010/010106 dans laquelle le BSA est utilisé comme solvant et donc en large excès.

L'ester benzylique du (2-(4-biphényl)méthyl)acrylate est de préférence ajouté dans des quantités comprises entre 1 et 2 équivalents, de préférence entre 1 et 1,5 équivalents, plus préférablement à 1 équivalent par rapport au composé de formule (A).

Le milieu réactionnel comprenant le composé de formule (A), l'ester benzylique du (2-(4-biphényl)méthyl)acrylate et la source de groupements triméthylsilyles est agité pendant un temps suffisant pour que la conversion du composé de formule (A) soit supérieure ou égale à 90%. Le suivi de la réaction est notamment assuré par HPLC. De préférence, ce temps est compris entre 1h et 8h, préférablement entre 3h et 6h, plus préférablement entre 3h et 4h. Ladite agitation est avantageusement réalisée à une température comprise entre 40°C et 120°C, préférablement entre 60°C et 100°C, plus préférablement entre 75°C et 85°C.

L'étape (2a) est de préférence réalisée sous atmosphère inerte, par exemple sous atmosphère d'azote ou d'argon.

Le composé de formule (B) est ensuite récupéré lors de l'étape (2b).

Selon une première variante de l'invention, l'étape (2b) correspond à l'étape (2b.1) de cristallisation. Selon cette variante, l'étape (2a) est donc avantageusement directement suivie de l'étape (2b.1). Dans cette première variante, l'étape (2b.2) n'est pas réalisée.

L'étape (2b.1) de cristallisation comprend typiquement les étapes successives suivantes :
(2b.1.1) refroidissement du milieu réactionnel issu de l'étape (2a) à une température comprise entre 20°C et 40°C,
(2b.1.2) dilution dudit milieu réactionnel avec un mélange de solvant aprotique apolaire et d'eau et formation d'une suspension,
(2b.1.3) récupération du composé de formule (B) par filtration de la suspension issue de l'étape (2b.1.2) et séchage, notamment sous vide.

Selon cette variante, le composé de formule (B) cristallise donc dans un mélange de solvant aprotique apolaire et d'eau. Le solvant aprotique apolaire est notamment choisi parmi les hydrocarbures, tels que l'hexane, l'heptane, les éthers tels que le diéthyléther, l'éther diisopropylique, le méthyl-tert-butyl-éther (MTBE) et le tétrahydrofurane (THF), et leurs mélanges. En particulier il s'agit du MTBE. Le solvant de cristallisation de l'étape (2b.1.2) est donc de préférence un mélange MTBE/eau, notamment en proportion 5/3.

La présence d'eau dans le milieu réactionnel permet notamment de déprotéger les fonctions TMS. Avant l'étape de précipitation, le composé (B) en solution est non enrichi ou faiblement enrichi en diastéréoisomère (1R, 2S). Le rapport des diastéréisomères sur le 2^{ème} carbone (1R, 2S/1R, 2R) est par exemple de 60/40, mesuré par RMN ¹³P.

Lors de l'étape (2b.1.2), ledit milieu réactionnel après dilution dans un mélange de solvant aprotique apolaire et de solvant polaire est agité pendant un temps suffisant pour que le composé (B) précipite, ce temps étant typiquement compris entre 2h et 24h, de préférence 12h.

Dans ces conditions décrites, la cristallisation de l'étape (2b.1.2) est diastéréosélective, ce qui signifie que le diastéréoisomère désiré, de configuration (1R, 2S), précipite de façon majoritaire par rapport au diastéréoisomère (1R, 2R). Le composé de formule (B) obtenu à la fin de l'étape (2) est donc majoritairement de configuration (1R, 2S).

Par « majoritairement » ou « de façon majoritaire », on entend, au sens de la présente invention, que le diastéréoisomère (1R, 2S) est obtenu dans des proportions strictement supérieures à 50% par rapport au diastéréoisomère (1R, 2R).

Selon une première variante de l'invention, le composé de formule (B) issu de l'étape (2b.1) a une pureté optique sur le 2^{ème} carbone (2S/2R) supérieure à 95/5, préférablement supérieure à 96/4, plus préférablement supérieure à 97/3, encore plus préférablement supérieure à 98/2, encore plus préférablement supérieure à 99/1.

Selon la présente invention, le composé de formule (B) issu de la réaction avec l'ester benzylique du (2-(4-biphényl)méthyl)acrylate est obtenu avec un rendement moyen de 54%. Compte tenu du rapport diastéréoisomérique sur le 2^{ème} carbone (2S/2R) de l'ordre de 60/40 obtenu à l'issu de l'étape (2a), le rendement moyen de l'étape de cristallisation (2b.1) est de l'ordre de 90%, comparé au 79% de l'étape de cristallisation du composé issu de la réaction avec l'ester de benzylique du (2-(4-biphényl)méthyl)acrylate décrite dans la demande WO 2010/010106 (voir Exemple 3, étape 1).

Selon une seconde variante de l'invention, l'étape (2b) correspond à l'étape (2b.2). Ainsi, l'étape (2a) est avantageusement directement suivie de l'étape (2b.2). Dans cette seconde variante, l'étape (2b.1) n'est pas réalisée.

L'étape (2b.2) comprend typiquement les étapes successives suivantes :
(2b.2.1) évaporation du milieu réactionnel issu de l'étape (2a) et récupération d'un solide,
(2b.2.2) trituration du solide issu de l'étape (2b.2.1) dans l'acétone, filtration et récupération du composé de formule (B) dans le filtrat par évaporation.

Typiquement, le solide issu de l'étape (2b.2.1) correspond au composé de formule (B) dit « brut », c'est-à-dire ayant une pureté optique sur le 2^{ème} carbone (2S/2R) avantageusement strictement supérieure à 50/50 et inférieure ou égale à 95/5, typiquement comprise entre 51/49 et 70/30, notamment 57/43.

L'étape (2b.2.2) correspond à une étape d'enrichissement diastéréoisomérique du composé de formule (B).

Selon un mode de réalisation préféré, la trituration de l'étape (2b.2.2) est réalisée pendant une durée comprise entre 30 min et 2h, typiquement pendant 1h. La température de ladite étape est notamment égale à la température ambiante.

Durant cette étape de trituration, le diastéréoisomère de configuration (1R, 2R) précipite majoritairement, et le diastéréoisomère désiré de configuration (1R, 2S) est récupéré de façon majoritaire dans le filtrat.

Typiquement, le composé de formule (B) obtenu dans le filtrat, à l'issue de l'étape (2b.2.2), possède une pureté optique sur le 2^{ème} carbone (2S/2R) comprise entre 70/30 et 90/10, de préférence entre 80/20 et 90/10, notamment 81/19.

### Etape 3

L'étape 3 du procédé de la présente invention comprend les étapes (3a) et (3b) telles que décrites ci-dessus et dans le schéma suivant.

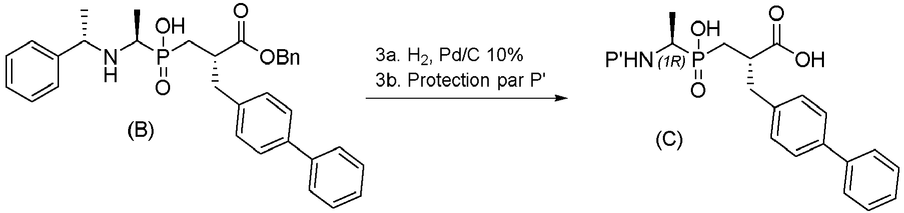

L'étape (3a) consiste en une hydrogénolyse en présence de palladium sur charbon (Pd/C) permettant de déprotéger le groupement benzyle et le groupement 1-phényléthyle présents sur le composé de formule (B). Dans la demande WO2010/010106, la déprotection du groupement benzyle et du groupement carboxybenzyle de l'ester benzylique de l'acide 3-[(2-benzyloxycarbonyl-3-biphényl-4-yl-propyl)-hydroxy-phosphinoyl]butyrique se fait par saponification en présence d'une quantité importante de soude (voir Exemple 3, étape 2). Cependant, cette saponification est difficile à mettre en oeuvre à l'échelle industrielle car les quantités générées d'alcool benzylique, créent un milieu triphasique, rendant difficile l'isolation de l'intermédiaire réactionnel et peuvent générer des impuretés en quantité conséquente.

Selon la présente invention, la déprotection par hydrogénolyse ne génère pas d'alcool benzylique mais des sous produits facilement éliminables, par évaporation sous pression réduite, comme le toluène et l'éthylbenzène, et se révèle donc plus adaptée à une synthèse à l'échelle industrielle.

La déprotection successive du groupement benzyle et du groupement 1-phényléthyle selon la présente invention est illustrée dans le schéma suivant : 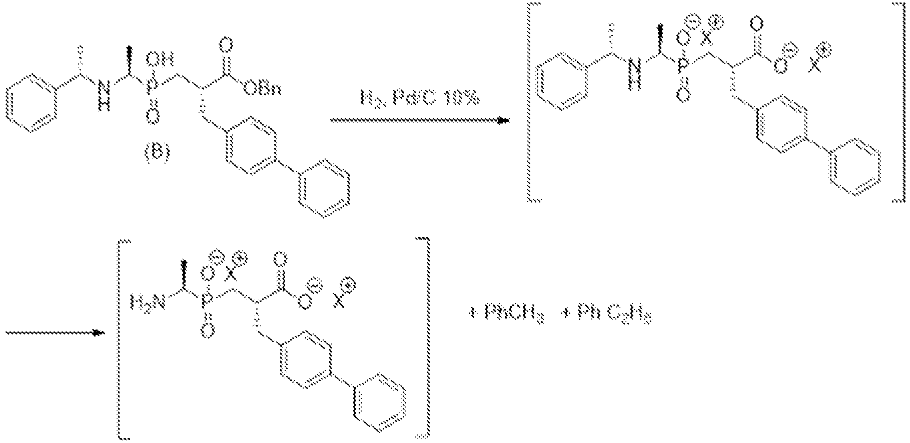 où X⁺ représente un contre ion issu de la base utilisée.

Avantageusement, l'étape (3a) comprend les étapes successives suivantes :
(3a.1) préparation d'une suspension comprenant le composé de formule (B) dans un solvant protique ou un mélange de solvants protiques,
(3a.2) ajout d'une base dans la suspension préparée à l'étape (3a.1),
(3a.3) ajout à la suspension résultante de l'étape (3a.2) de 10% en poids de Pd/C par rapport au poids du composé de formule (B) et purge du milieu réactionnel résultant avec H₂,
(3a.4) filtration et concentration du milieu réactionnel.

Selon un mode de réalisation préféré, l'étape (3a. 1) est réalisée dans un solvant protique choisi parmi l'eau, l'acide acétique, les alcools tels que le méthanol, l'éthanol, le n-propanol, l'isopropanol, le *n-*butanol, l'isobutanol et le tert-butanol, et leurs mélanges. De préférence, il s'agit d'un mélange eau/alcool, notamment eau/éthanol.

Avantageusement, la base dans l'étape (3a.2) est choisie parmi la triéthylamine, la triméthylamine, le diisopropyléthylamine, l'hydroxyde de sodium (NaOH), l'hydroxyde de potassium (KOH), l'hydroxyde de lithium (LiOH), le dihydroxyde de barium (Ba(OH)₂), le dihydroxyde de calcium (Ca(OH)₂) et le dihydroxyde de césium (Cs(OH)₂), de préférence il s'agit d'hydroxyde de sodium, en particulier d'hydroxyde de sodium 1N.

Selon un mode de réalisation préféré, lors de l'ajout de ladite base forte, la suspension issue de l'étape (3a.1) se trouve à une température comprise entre -10°C et 10°C, de préférence entre -5°C et 5°C, plus préférablement à 0°C.

La base forte est avantageusement ajoutée à la suspension issue de l'étape (3a. 1) dans des quantités comprises entre 1 et 2 équivalents, de préférence entre 1 et 1,5 équivalents, plus préférablement à 1 équivalent par rapport au composé de formule (B).

Le mélange résultant de l'étape (3a.2) est typiquement agité à température ambiante pendant une durée suffisante pour observer une solubilisation complète, notamment pendant un temps compris entre 1 heure et 5 heures.

Après l'ajout de Pd/C dans le milieu réactionnel, celui-ci est avantageusement purgé avec de l'azote ou de l'argon avant d'être purgé avec du dihydrogène.

Selon un mode de réalisation, le milieu réactionnel résultant de l'étape (3a.3) est agité pendant un temps compris entre 15h et 30h, de préférence entre 18h et 25h, plus préférablement pendant 18h, à une température comprise entre 15°C et 40°C, de préférence entre 20°C et 30°C. Cette agitation se fait typiquement sous une pression de 1 bar de dihydrogène.

Dans un mode de réalisation particulier, l'agitation du milieu réactionnel résultant de l'étape (3a.3) est stoppée après un temps suffisant pour déprotéger le groupement benzyle mais avant que la déprotection du groupement phényléthyle n'ait lieu. Dans ce cas, la fonction amine reste protégée par le groupement phényléthyle et l'étape (3b) n'est pas nécessaire.

Lors de l'étape (3a.4), le milieu réactionnel est filtré pour éliminer le Pd/C. Le filtrat est ensuite concentré, par exemple sous vide, pour éliminer une partie du solvant, notamment l'alcool.

Il est décrit dans la littérature, comme par exemple dans la publication de Baylis et al, J. Chem. Soc., Perkin trans. I 1984, p.2846-2853, que l'acide phosphinique est un poison du catalyseur au Pd. C'est pourquoi, il est alors nécessaire d'utiliser de grosses quantités de Pd/C, comme décrit dans WO2010/010106 pour la synthèse de l'Exemple 4 (PL265), où 50% en poids de Pd/C 10% sont utilisés. Ces grosses quantités entrainent parfois une hydrogénation de la liaison P-C. Dans le cas de la présente invention, pour la synthèse du composé de formule (C), le contrôle du pH basique à l'aide d'une base telle que décrite ci-dessus pour l'étape (3a.2), permet l'utilisation de seulement 10 % en poids de Pd/C.

L'étape (3b) consiste en la protection de la fonction amine primaire présente sur l'intermédiaire réactionnel issu de l'étape (3a) à l'aide d'un groupement protecteur noté P'. Cette protection se fait selon des méthodes bien connues de l'homme de l'art.

Selon un mode de réalisation préféré, l'étape de protection (3b) est réalisée en milieu basique, de préférence par ajout d'une base forte telle que NaOH, LiOH, KOH, Ba(OH)₂, Ca(OH)₂ ou CsOH. En particulier, le pH de la réaction est compris entre 10 et 11. Un pH trop acide peut conduire à la formation d'impuretés polaires et un pH supérieur à 11 peut dégrader le réactif permettant d'introduire le groupement protecteur P'.

Avantageusement, le groupement P' est choisi parmi le groupe constitué des groupements benzyloxycarbonyle (CBz) et tert-butoxycarbonyle (Boc), conduisant respectivement aux composés de formule (C-a) et (C-b) suivantes :

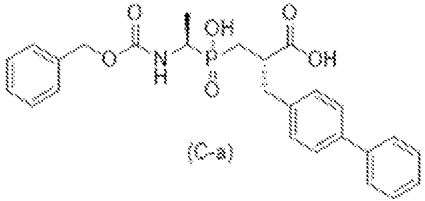

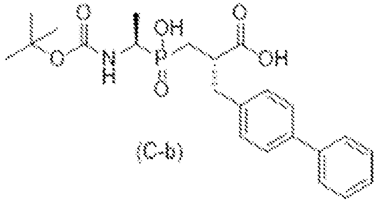

Le groupement Cbz est notamment introduit sur le composé de formule (B) à l'aide du chlorure correspondant CBzCl. Le groupement Boc est notamment introduit sur le composé de formule (B) à l'aide de l'anhydride BoczO.

Selon la présente invention, le composé de formule (C) est obtenu avec un rendement compris entre 50% et 85%. En particulier, le composé de formule (C-a) est obtenu avec un rendement moyen de 73% et le composé de formule (C-b) est obtenu avec un rendement moyen de 84%.

Selon, la première variante de l'invention telle que décrite ci-dessus, c'est-à-dire selon laquelle, les étapes (3a) et (3b) telles que décrites ci-dessus sont réalisées en utilisant dans l'étape (3a) un composé de formule (B) obtenu à la suite de l'étape (2b.1) et ayant une pureté optique (2S/2R) supérieure à 95/5. Selon cette première variante, le composé de formule (C) de configuration (1R, 2S) obtenu directement à la suite de l'étape (3b) a une pureté optique sur le 2^{ème} carbone (2S/2R) supérieure à 95/5, préférablement supérieure à 96/4, plus préférablement supérieure à 97/3, encore plus préférablement supérieure à 98/2, encore plus préférablement supérieure à 99/1.

Selon cette première variante de la présente invention, le composé de formule (C) est notamment obtenu avec un rendement compris entre 70% et 85%. En particulier, le composé de formule (C-a) est obtenu avec un rendement moyen de 73% et le composé de formule (C-b) est obtenu avec un rendement moyen de 84%.

Selon cette première variante, le composé de formule (C) est récupéré à la fin de l'étape (3b) et directement utilisé dans l'étape (4) suivante sans purification et sans autre étape intermédiaire.

Selon une seconde variante de l'invention les étapes (3a) et (3b) telles que décrites ci-dessus sont réalisées en utilisant dans l'étape (3a) un composé de formule (B), obtenu à l'issu de l'étape (2b.2) et ayant une pureté optique sur le 2^{ème} carbone (2S/2R) strictement supérieure à 50/50 et inférieure à 95/5, typiquement comprise entre 70/30 et 90/10, notamment 81/19.

Selon cette seconde variante, une étape supplémentaire d'enrichissement diastéréoisomérique du composé de formule (C) est réalisée à la suite de l'étape (3b). Ainsi, le procédé de l'invention peut comprendre, directement à la suite de l'étape (3b), l'étape supplémentaire (3c) suivante :
(3c) le composé de formule (C) est trituré dans un mélange eau/MTBE puis filtré et séché.

Selon un mode de réalisation préféré, la trituration de l'étape (3c) est réalisée pendant une durée comprise entre 30 min et 2h, typiquement pendant 1h. La température de ladite étape est notamment égale à la température ambiante.

Les proportions volumiques du mélange eau/MTBE lors de l'étape (3c) sont typiquement comprises entre 1/5 et 1/1, de préférence 3/5.

Typiquement, selon la seconde variante de l'invention, le composé de formule (C) obtenu à l'issu de l'étape (3c) possède une pureté optique sur le 2^{ème} carbone (2S/2R) comprise entre 80/20 et 99/1, de préférence entre 90/10 et 95/5, notamment 93/7. Selon cette seconde variante de la présente invention, le composé de formule (C) est obtenu avec un rendement de l'ordre de 53 %.

### Etape 4

L'étape 4 du procédé de la présente invention comprend les étapes (4a) et (4b) telles que décrites ci-dessus et dans le schéma suivant.

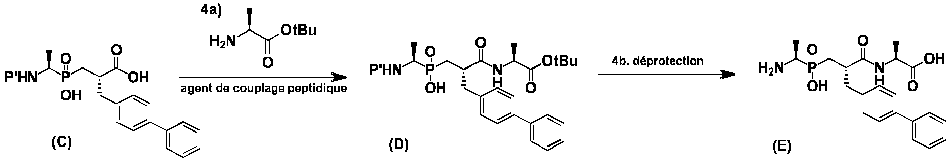

Avantageusement, l'étape (4a) comprend les étapes successives suivantes :
(4a.1) ajout de l'ester tert-butylique de la (L)-alanine et d'un agent de couplage peptidique à une solution comprenant le composé de formule (C) dissout dans le DMF ou dans un mélange THF/DMF,
(4a.2) ajout d'une base au milieu réactionnel résultant de l'étape (4a.1),
(4a.3) récupération du composé de formule (D) suivante : 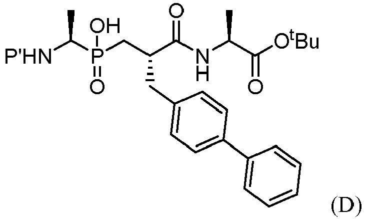
dans laquelle P' est tel que défini ci-dessus ou correspond à un groupement phényléthyle.

L'agent de couplage peptidique introduit à l'étape (4a.1) est typiquement choisi parmi TBTU, HATU, EDC, HOBt, BOP, PyBOP, DCC et leurs combinaisons.

L'étape (4a.1) est préférablement réalisée à température ambiante. Lorsqu'un mélange THF/DMF est utilisé lors de l'étape (4a.1), il s'agit préférablement d'un mélange 1/1 en volume.

La base introduite à l'étape (4a.2) est préférablement choisie parmi la triéthylamine, la diisopropyléthylamine (DIPEA) et la 2,2,6,6-tétraméthylpipéridine, de préférence il s'agit de la DIPEA.

Selon un mode de réalisation préféré, le milieu réactionnel issu de l'étape (4a.1) se trouve à une température comprise entre 0°C et 15°C, de préférence entre 5°C et 10°C, lors de l'ajout de la base à l'étape (4a.2). Ladite température est maintenue au cours de l'addition de la base qui est généralement exothermique.

Selon un mode de réalisation avantageux, le milieu réactionnel résultant de l'étape (4a.2) est agité pendant un temps suffisant pour que la conversion du composé de formule (C) soit supérieure ou égale à 95%. Le suivi de la réaction est notamment assuré par HPLC. De préférence, ce temps est compris entre compris entre 30 min et 2h, de préférence entre 30 min et 1h, plus préférablement pendant 45 min, à une température comprise entre 0°C et 15°C, de préférence entre 5°C et 10°C.

Le composé de formule (D) est récupéré à la suite d'opération de lavages acido-basiques, d'extraction en phase organique et de filtration bien connues de l'homme de l'art.

De manière préférée, le composé de formule (D) correspond aux composés (D-a) et (D-b) suivants :

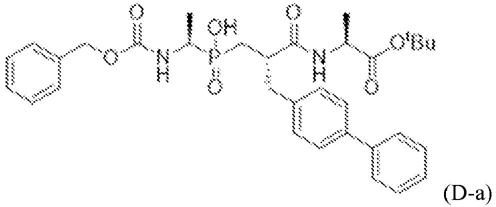

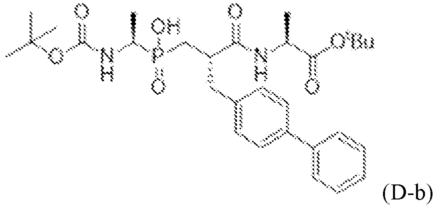

Le composé de formule (D) est obtenu avec un rendement compris entre 60% et 90%.

L'étape (4b) de déprotection du groupement P' est de préférence réalisée sous atmosphère inerte, par exemple sous atmosphère d'azote ou d'argon.

Dans un mode de réalisation particulier, lorsque P' est un groupement CBz, l'étape (4b) comprend les étapes successives suivantes :
(4b.1) réaction du composé du composé (D-a) de formule suivante : 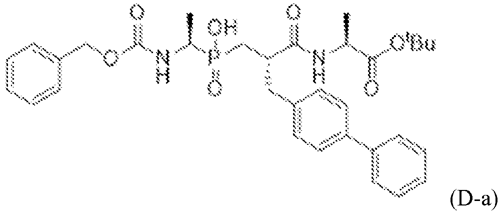 avec HBr dans l'acide acétique, puis
(4b.2) précipitation à l'aide d'un solvant choisi parmi l'acétate d'éthyle, l'acétate d'isopropyle, les éthers et leurs mélanges, et récupération du composé du composé de formule (E) par filtration.

De manière préférée, l'étape (4b.1) comprend les étapes successives suivantes :
(4b.1.1) mélange du composé de formule (D-a) avec de l'acide acétique,
(4b.1.2) ajout d'acide bromhydrique sous forme d'une solution de HBr dans l'acide acétique,
(4b.1.3) agitation du mélange résultant pendant un temps suffisant pour que la conversion du composé de formule (D-a) soit supérieure ou égale à 95%.

L'acide bromhydrique HBr est de préférence ajouté dans des quantités comprises entre 6 et 10 équivalents, préférablement entre 6 et 8 équivalents, plus préférablement à 6 équivalents par rapport au composé (D-a). Une quantité d'acide bromhydrique supérieure à 10 équivalents conduit à une racémisation partielle du produit, lors de la concentration. Un minimum de 6 équivalents est nécessaire pour que la déprotection soit totale. Par comparaison, l'étape de déprotection similaire utilisant HBr dans l'acide acétique dans la demande WO2010/010106 (voir Exemple 3, étape 2) utilisait 28 équivalents de HBr. Les quantités utilisées dans la présente invention permettent notamment une élimination plus aisée de l'acide restant, notamment par évaporation.

Dans un mode de réalisation préféré, le mélange résultant de l'étape (4b.1.1) se trouve à une température comprise entre 5°C et 20°C, de préférence entre 10°C et 15°C lors de l'ajout d'acide bromhydrique. La température est maintenue en dessous de 20°C, de préférence entre 15°C et 20°C durant l'ajout d'HBr et durant l'étape (4b.1.3). Une température supérieure à 20°C entrainerait une racémisation partielle du produit résultant.

Le milieu réactionnel résultant de l'étape (4b.1.2) est agité pendant un temps suffisant pour que la conversion de la (S)-1-phényléthylamine soit supérieure ou égale à 95%. Le suivi de la réaction est notamment assuré par HPLC. De préférence, ce temps est compris entre 2h et 8h, préférablement entre 3h et 6h, plus préférablement entre 5h et 6h.

Les éthers dans l'étape (4b.2) sont préférablement choisis parmi l'éther diisopropylique, le tétrahydrofurane, le méthyl-tert-butyl ether, le dioxane, le diéthyléther, l'éther de pétrole et leurs mélanges.

De préférence, le solvant de l'étape (4b.2) correspond à l'éther diisopropylique.

Dans un autre mode de réalisation particulier, lorsque P' est un groupement Boc, l'étape (4b) comprend les étapes successives suivantes :
(4b.1') réaction du composé du composé (D-b) de formule suivante : 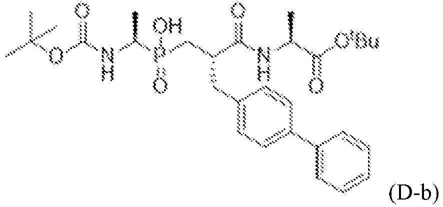 avec de l'acide formique pour conduire à une huile,
(4b.2') trituration de l'huile résultante de l'étape (4b.1') dans un solvant aprotique apolaire et récupération du composé du composé de formule (E) par filtration.

De manière préférée, l'étape (4b.1') comprend les étapes successives suivantes :
(4b.1'.1) mélange du composé de formule (D-b) avec de l'acide formique,
(4b.1'.2) agitation de la solution résultante pendant un temps compris entre 1h et 4h, de préférence pendant 2h, à une température comprise entre 40°C et 60°C, de préférence à 50°C,
(4b.1'.3) concentration de la solution, notamment sous vide, jusqu'à l'obtention d'une huile.

Dans l'étape (4b.1'.1), l'acide formique est préférablement ajouté dans des proportions comprises entre 20 et 40 équivalents, préférablement entre 20 et 30 équivalents, plus préférablement à 26 équivalents par rapport au composé de formule (D-b). L'acide formique utilisé est typiquement de l'acide formique à 88% en volume en solution aqueuse.

L'acide formique a l'avantage d'être peu acide et peu corrosif et peut être éliminé facilement, il est donc particulièrement adapté à une synthèse à l'échelle industrielle.

De manière avantageuse, le solvant aprotique apolaire de l'étape (4b.2') est choisi parmi l'hexane, l'heptane, l'éther diisopropylique, le MTBE et leurs mélanges, de préférence il s'agit du MTBE.

Le composé de formule (E) est typiquement obtenu avec un rendement compris entre 90% et 95%.

Selon la première variante de l'invention telle que décrite ci-dessus, impliquant la réalisation de l'étape (2b.1), dans laquelle les étapes (2b.2) et (3c) ne sont pas réalisées, et selon laquelle les étapes (4a) et (4b) telles que décrites ci-dessus sont réalisées en utilisant dans l'étape (4a) le composé de formule (C) issu de l'étape (3b) et ayant une pureté optique sur le 2^{ème} carbone (2S/2R) supérieure à 95/5, préférablement supérieure à 96/4, plus préférablement supérieure à 97/3, encore plus préférablement supérieure à 98/2, encore plus préférablement supérieure à 99/1. Selon cette première variante, le composé de formule (D) de configuration (1R, 2S, L-Ala) a une pureté optique sur le 2^{ème} carbone (2S/2R) supérieure à 95/5, préférablement supérieure à 96/4, plus préférablement supérieure à 97/3, encore plus préférablement supérieure à 98/2, encore plus préférablement supérieure à 99/1, et le composé de formule (E) de configuration (1R, 2S, L-Ala) a également une pureté optique sur le 2^{ème} carbone (2S/2R) supérieure à 95/5, préférablement supérieure à 96/4, plus préférablement supérieure à 97/3, encore plus préférablement supérieure à 98/2, encore plus préférablement supérieure à 99/1.

Selon une seconde variante de l'invention telle que décrite ci-dessus, impliquant la réalisation de l'étape (2b.2) et de l'étape supplémentaire (3c), dans laquelle l'étape (2b.1) n'est donc pas réalisée, et où les étapes (4a) et (4b) telles que décrites ci-dessus sont réalisées en utilisant dans l'étape (4a) un composé de formule (C) issu de l'étape (3c) et ayant une pureté optique sur le 2^{ème} carbone (2S/2R) strictement supérieure à 50/50 et inférieure ou égale à 95/5, de préférence comprise entre 90/10 et 95/5, notamment 93/7. Selon cette première variante, le composé de formule (D) de configuration (1R, 2S, L-Ala) a une pureté optique comprise entre 80/20 et 99/1, de préférence entre 90/10 et 95/5.

Selon cette seconde variante, une étape supplémentaire d'enrichissement diastéréoisomérique du composé de formule (E) est réalisée à la suite de l'étape (4b). Ainsi, le procédé de l'invention peut comprendre, directement à la suite de l'étape (4b), l'étape supplémentaire (4c) suivante :
(4c) le composé de formule (E) est trituré dans le dichlorométhane.

Selon un mode de réalisation préféré, la trituration de l'étape (4c) est réalisée pendant une durée comprise entre 30 min et 2h, typiquement pendant 1h. La température de ladite étape est notamment égale à la température ambiante.

Typiquement, le composé de formule (E) obtenu à l'issue de l'étape (4c) possède possède une pureté optique sur le 2^{ème} carbone (2S/2R) compris entre 90/10 et 99/1, notamment 94/6.

### Procédé de préparation d'un composé de formule (I)

Un autre objet de la présente invention concerne un procédé de préparation industrielle du sel disodique de ((2S)-3-([1,1'-biphenyl]-4-yl)-2-((hydroxy((1R)-1-(((1-(isobutyryloxy)ethoxy) carbonyl)amino)ethyl)phosphoryl)methyl)propanoyl)-L-alanine de formule (I) suivante: 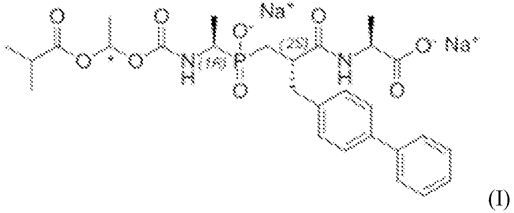 comprenant les étapes suivantes : 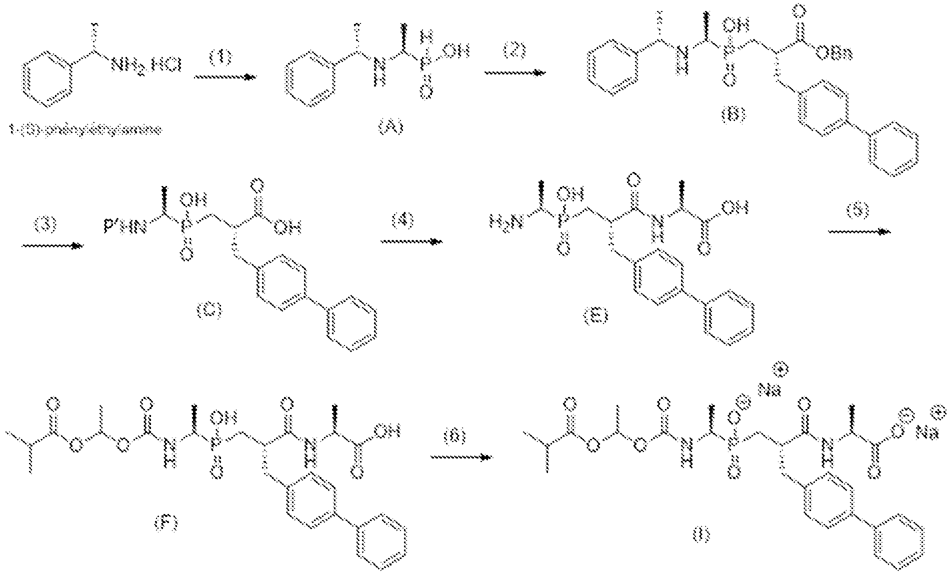
Etape (1) à (4) : telles que décrites précédemment,
Etape (5) : Synthèse du composé de formule (F) par réaction du composé de formule (E) avec le *N-*hydroxysuccinimide d'acyloxyalkyle en présence d'une base ;
Etape (6) : Récupération du composé de formule (I) par précipitation dans un solvant aprotique apolaire en présence d'un sel sodique de base faible.

Le procédé de préparation industrielle du composé de formule (I) comprend donc les étapes successives (1) à (4) telles que définies ci-dessus, selon l'une ou l'autre des première et seconde variante décrites ci-dessus, et, directement à la suite de l'étape (4), les étapes (5) et (6), rapportées en détail ci-après.

### Etape 5

L'étape 5 selon la présente invention comprend la réaction du composé de formule (E) avec avec le *N-*hydroxysuccinimide d'acyloxyalkyle en présence d'une base pour conduire au composé de formule (F) telle que décrit dans le schéma suivant :

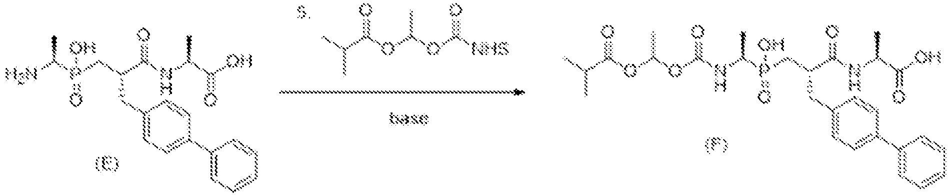

L'étape (5) comprend avantageusement les étapes successives suivantes :
(5a) réaction du composé de formule (E) avec le *N*-hydroxysuccinimide d'acyloxyalkyle en présence d'une base dans un solvant aprotique polaire,
(5b) cristallisation à l'aide d'un solvant apolaire aprotique et récupération du composé de formule (F) par filtration.

De manière préférée, l'étape (5a) comprend les étapes successives suivantes :
(5a.1) dissolution du composé de formule (E) dans un solvant aprotique polaire,
(5a.2) ajout de *N*-hydroxysuccinimide d'acyloxyalkyle à la solution résultante de l'étape (5a.1),
(5a.3) ajout de la base à la solution résultante de l'étape (5a.2).

La réaction du composé de formule (E) avec le *N*-hydroxysuccinimide d'acyloxyalkyle (CAS 860035-3-10-5) génère du N-hydroxysuccinimide comme sous produit, facilement éliminé par lavage aqueux. L'introduction du groupement acyloxyalkyle ne nécessite pas de purification par colonne de silice, peu adaptée à une synthèse à l'échelle indutrielle, au contraire de la synthèse décrite dans la demande WO2010/010106 qui génère du 4-nitrophénol et nécessite donc une purification sur gel de silice.

Dans l'étape (5a.1), la dissolution du composé de formule (E) est préférablement réalisée à température ambiante.

Le solvant aprotique polaire est notamment choisi parmi le DMF, le DMSO, l'acétone et l'acétate d'éthyle, de préférence il s'agit du DMF.

Avantageusement, le *N*-hydroxysuccinimide d'acyloxyalkyle est ajouté à la solution résultante de l'étape (5a.1) dans des quantités comprises entre 1 et 2 équivalents, de préférence entre 1 et 1,5 équivalents, plus préférablement à 1 équivalent par rapport au composé de formule (E).

De préférence, la solution résultante de l'étape (5a.1) se trouve à une température comprise entre 0°C et 15°C, préférablement entre 5°C et 10°C lors de l'ajout de *N*-hydroxysuccinimide d'acyloxyalkyle.

La base introduite lors de l'étape (5a.3) est notamment choisie parmi la triéthylamine, la diisopropyléthylamine (DIPEA) et la 2,2,6,6-tétraméthylpipéridine, en particulier la triéthylamine.

La température du milieu réactionnel est maintenue à une température inférieure à 15°C de préférence entre 10°C et 15°C pendant l'addition de la base.

Préférablement, la base est ajoutée à la solution résultante de l'étape (5a.2) dans des quantitées comprise entre 1 et 4 équivalents, de préférence entre 2 et 3 équivalents, notamment entre 2 et 2,5 équivalents, par rapport au composé de formule (E).

Le milieu réactionnel résultant de l'étape (5a.3) est agité pendant un temps suffisant pour que la conversion du composé de formule (F) soit supérieure ou égale à 95%. Le suivi de la réaction est notamment assuré par HPLC. De préférence, ce temps est compris entre 1h et 8h, préférablement entre 4h et 6h, plus préférablement entre 4h et 5h. Ladite agitation est avantageusement réalisée à une température comprise entre 10°C et 20°C, préférablement entre 15°C et 20°C.

Des opérations de lavages acido-basiques, notamment acides, et d'extraction en phase organique bien connues de l'homme de l'art peuvent être réalisées entre les étapes (5a) et (5b).

Le solvant aprotique apolaire utilisé pour la cristallisation dans l'étape (5b) est typiquement choisi parmi les hydrocarbures, tels que l'hexane, l'heptane, les éthers tels que le diéthyléther, l'éther diisopropylique, le méthyl-tert-butyl-éther (MTBE) et le tétrahydrofurane (THF) et leurs mélanges. En particulier, il s'agit de l'éther diisopropylique.

Typiquement, la cristallisation est réalisée à température ambiante.

De manière particulièrement avantageuse, préalablement à l'étape (5b), un solvant aprotique polaire tel que le DMF, le DMSO, l'acétone, l'acétate d'éthyle, l'acétate d'isopropyle et leurs mélanges, de préférence l'actétate d'éthyle ou l'acétate d'isopropyle, en particulier l'acétate d'isopropyle, est ajouté au mélange résultant de l'étape (5b) ce qui permet d'initier la cristallisation. Selon ce mode de réalisation, après agitation du milieu réactionnel pendant une période comprise entre 30 min et une heure, de préférence 30 min, typiquement à température ambiante, ledit solvant aprotique polaire est éliminé à 80%, plus ou moins 5%, par exemple par concentration sous vide, et le résidu résultant est mélangé au solvant aprotique apolaire de cristallisation tel que défini ci-dessus.

Le composé de formule (F) de configuration (1R, 2S, L-Ala) a avantageusement une pureté optique sur le 2^{ème} carbone (2S/2R) supérieure ou égale à 95/5, préférablement supérieure à 96/4, plus préférablement supérieure à 97/3, encore plus préférablement supérieure à 98/2, encore plus préférablement supérieure à 99/1.

Le composé de formule (F) est typiquement obtenu avec un rendement moyen de 89%.

### Etape (6)

L'étape (6) correspond la salification par du sodium du composé de formule (F) pour conduire au sel disodique de formule (I).

Le sel sodique de base faible a pour mission d'ioniser les fonctions hydroxyles et de fournir les contre ions sodium pour obtenir le sel de formule (I). Le sel sodique de base faible est de préférence l'hydrogénocarbonate de sodium.

Avantageusement, le sel sodique de base faible est ajouté dans des quantités comprises entre 2 plus ou moins 0,2 équivalent, comparé au composé de formule (F).

Selon un mode de réalisation préféré, l'étape (6) comprend les étapes successives suivantes :
(6a) dissolution du composé de formule (F) dans un solvant miscible à l'eau et ayant un faible point d'ébullition tel que les éthers, en particulier le THF ou le dioxane, de préférence le THF,
(6b) ajout d'eau et d'un sel sodique de base faible à la solution résultante de l'étape (6a), (6c) élimination du solvant de l'étape (6a), notamment par concentration sous vide,
(6d) ajout d'un solvant aprotique apolaire, utile pour faire précipiter le composé de formule (I),
(6e) récupération du composé de formule (I) par filtration et séchage.

Le mélange résultant de l'étape (6b) est notamment agité pendant une période de temps comprise entre 15 min et une heure, de préférence ce temps est de 30 min. Lorsque l'hydrogénocarbonate de sodium est utilisé comme source d'ions sodium, ledit mélange est agité pendant un temps suffisant pour que le dégagement gazeux provoqué par l'ajout de l'hydrogénocarbonate de sodium disparaisse. Ce dégagement gazeux est provoqué par la formation de COz lors de la réaction de NaHCOs avec le composé de formule (F).

Préférablement, à la suite de l'étape (6c) et avant l'étape (6d), plusieurs opérations d'addition-élimination du THF sont effectuées, afin d'éliminer l'eau par distillation azéotropique.

De préférence, le solvant aprotique apolaire de l'étape (6d) est choisi parmi les éthers, en particulier parmi l'éther diisopropylique et l'éther diéthylique. Plus préférablement, il s'agit de l'éther diisopropylique.

De manière préférée, l'étape (6d) est effectuée en deux temps. Dans un premier temps, ¼ du volume dudit solvant aprotique apolaire est ajouté au résidu résultant de l'étape (6c) puis le mélange résultant est concentré, notamment sous vide, pour éliminer la phase organique. Dans un deuxième temps, les ¾ restants du volume dudit solvant aprotique apolaire sont ajoutés au résidu résultant de la première concentration. La suspension résultante est typiquement agitée pendant un temps compris entre 30 min et 2h, de préférence 1h, en particulier à température ambiante avant d'être filtrée.

Le composé de formule (I) de configuration (1R, 2S, L-Ala) a avantageusement une pureté optique sur le 2^{ème} carbone (2S/2R) supérieure ou égale à 95/5, préférablement supérieure à 96/4, plus préférablement supérieure à 97/3, encore plus préférablement supérieure à 98/2, encore plus préférablement supérieure à 99/1.

Le composé de formule (I) est typiquement obtenu avec un rendement moyen de l'étape (6) de 91%.

Selon la présente invention, le composé de formule (I) est donc obtenu par précipitation dans un solvant apolaire aprotique plutôt que par lyophilisation comme décrit dans WO2010/010106, la lyophilisation étant peu adaptée à une synthèse à l'échelle industrielle.

### Procédé d'enrichissement diastéréoisomérique

La présente invention porte également sur un procédé d'enrichissement diastéréoisomérique des intermédiaires du procédé de préparation industrielle du composé de formule (E) de la présente invention.

Ledit procédé d'enrichissement diastéréoisomérique consiste à réaliser un enrichissement diastéréoisomérique de chacun des composés de formules (B), (C) et (E) lorsque ceux-ci ont une pureté optique sur le 2^{ème} carbone (2S/2R) inférieure ou égale à 95/5. Pour cela, une étape de trituration dans un solvant approprié est réalisée à chacune des étapes (2), (3) et (4) telles que décrites ci-dessus lorsque les composés de formules (B), (C) et (E) ont une pureté optique sur le 2^{ème} carbone (2S/2R) inférieure ou égale à 95/5.

Ainsi, le procédé de préparation du composé de formule (E) faisant intervenir un procédé d'enrichissement diastéréoisomérique selon la présente invention est effectué à partir d'un composé de formule (B) dit « brut » tel que décrit ci-dessus, correspondant au solide issu de l'étape (2b.2.1) décrite ci-dessus et ayant une pureté optique sur le 2^{ème} carbone (2S/2R) strictement supérieure à 50/50 et inférieure ou égale à 95/5, typiquement entre 51/49 et 60/40, notamment 57/43, le procédé de préparation du composé de formule (E) faisant intervenir un procédé d'enrichissement diastéréoisomérique comprend les étapes suivantes :
(2b.2.2) trituration du solide issu de l'étape (2b.2.1) dans l'acétone, filtration et récupération du composé de formule (B) dans le filtrat par évaporation.
(3c) à la suite de l'étape (3b) telle que décrite ci-dessus, trituration du composé de formule (C) dans un mélange eau/MTBE puis filtration et séchage,
(4c) à la suite de l'étape (4b) telle que décrite ci-dessus, trituration du composé de formule (E) dans le dichlorométhane, puis filtration et séchage.

Typiquement, le composé de formule (B) obtenu à l'issue de l'étape (2b.2.2) possède une pureté optique sur le 2^{ème} carbone (2S/2R) comprise entre 70/30 et 90/10, de préférence entre 80/20 et 90/10, notamment 81/19.

Typiquement, le composé de formule (C) obtenu à l'issue de l'étape (3c) possède une pureté optique sur le 2^{ème} carbone (2S/2R) comprise entre 80/20 et 99/1, de préférence entre 90/10 et 95/5, notamment 93/7.

Typiquement, le composé de formule (E) obtenu à l'issue de l'étape (4c) possède une pureté optique sur le 2^{ème} carbone (2S/2R) comprise entre 90/10 et 99/1, notamment 94/6.

Selon un mode de réalisation préféré, les triturations des étapes (2c), (3c) et (4c) sont réalisées pendant une durée comprise entre 30 min et 2h, typiquement pendant 1h. La température desdites étapes est notamment égale à la température ambiante.

Dans le procédé de préparation du composé de formule (E) faisant intervenir un procédé d'enrichissement diastéréoisomérique selon la présente invention, l'étape (2b.1) telle que décrite ci-dessus n'est pas réalisée et est remplacée par l'étape (2b.2).

Ces étapes de trituration (2b.2.2), (3c) et (4c) ne sont pas réalisées lorsque les composés (B), (C) et (D) sont obtenus avec une pureté optique sur le 2^{ème} carbone (2S/2R) supérieure à 95/5 à la fin des étapes respectives (2b), (3b) et (4b).

### Composé de formule (B)

La présente invention concerne également le composé de formule (B) suivante, de configuration (1R, 2S) :

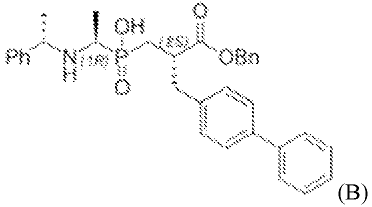

### EXEMPLES

Les exemples suivants permettent d'illustrer l'invention sans pour autant la limiter.

Les abréviations suivantes ont été utilisées :
- CCM: Chromatographie sur Couche Mince
- CLHP: Chromatographie liquide haute performance
- DMSO: Diméthylsulfoxyde
- éq.: Equivalent
- ESI: Ionisation par électrospray
- min: Minutes
- RMN: Résonance Magnétique Nucléaire
- TFA: Acide trifluoroacétique

### Acide [1R-[(1S-phenylethyl)amino]ethyl]-Phosphinique (composé A)

HCl concentré (8,14 g ; 1 equiv) puis une solution aqueuse à 50% de H₃PO₂ (12,1 g ; 1,1 equiv) sont additionnés successivement à une solution refroidie dans la glace de (S)-1-phényléthylamine (10 g ; 82,5 mmol) dans l'EtOH (40 mL, 4 volumes). Après une purge avec N₂, l'acétaldéhyde anhydre (4,36 g ; 1,2 equiv) est ajouté. Le mélange est chauffé au reflux à 80°C. Après 3h, le mélange est analysé par HPLC : si la conversion de l'amine en composé (A) est inférieure à 90% alors 0,2 équivalent d'acétaldéhyde sont ajoutés et le mélange est à nouveau porté au reflux pendant 1h. La solution est ensuite refroidie à 10°C, traitée par l'oxyde de propylène (9,57 g ; 2 equiv) et est laissé revenir à température ambiante.

La suspension est agitée la nuit à 20°C puis est filtrée. Le solide est lavé avec EtOH (5 mL ; 0,5 vol) puis est séché sous vide pour donner un solide blanc (1^{er} jet, rendement : 20,5% ; 1R/1S = 98/2). Le filtrat est dilué par iBuOAc (10 volumes pour former un azéotrope avec l'eau), puis est concentré en une bouillie blanche épaisse, dilué avec EtOH (4 volumes), est agité à 20 ° C pendant 1 heure. Le 2^{ème} jet est filtré, lavé avec EtOH (5 mL ; 0,5 volume) puis séché pour donner un solide blanc (rendement : 17,8%, 1R/1S = 92/8), ce qui donne un rendement global de 38-40% et une pureté optique (1R/1S) > 95/5.

RMN (DMSO D6+TFA), ¹H (400 MHz) : 1,27 (dd, 3H, CH₃); 1,57 (d, 3H, NCHCH₃); 3,06 (m,1H); 4,72 (m, 1H, NCH); 6,33 et 7,72 (2s, 1H, PH); 7,44 (m, 3H, arom) et 7,55 (m, 2H, arom). ³¹P 19,91 (0,02 P) ; 20,89 (0,98 P).

### [(1S)-1-[[(1R)-1-[[(2S)-3-benzyloxy-3-oxo-2-[(4-phenylphenyl)methyl]propyl]-hydroxy-phosphoryl]ethyl]amino]ethyl] Composé (B)

*N*,O-Bis(trimethylsilyl)acetamide (BSA) (10,67g ; 3,2 équivalents) sont ajoutés au composé (A) (3,5 g ; 16,4 mmol ; 1 équivalent) et à l'ester benzylique du (2-(4-biphenyl)methyl)acrylate (5,38g ; 1 équivalent) dans un réacteur purgé avec N₂. La suspension épaisse est chauffée de 40°C (capacité d'agitation minimale) à 80°C (solubilisation complète à 75°C) puis agitée pendant 3 heures. La solution est analysée par HPLC (conversion > 90/10), puis refroidie à 20-40° C et diluée avec du MTBE (20 volumes) et H₂O (3,5 mL ; 12 équivalents, réaction exotherme). Une suspension se forme en quelques heures. Celle-ci a été agitée pendant un minimum de 2 à 3 heures (une nuit de préférence, précipitation lente). La suspension est filtrée et séchée pour donner un solide blanc de configuration (1R, 2S) (5,11g ; Rdt : 54% ; (2S/2R = 96/4).

RMN (DMSO D6+TFA) ¹H (400 MHz) : d 1,24 (dd, 3H, C(2)CH₃) ; 1,54 (d, 3H, NCHCH₃) ; 1,91 et 2,18 (2 m, 2H, C(4)H₂) ; 2,89 (m, 1H, C(2)H) ; 3,0 (m, 2H, C(5)CH₂) ; 3,09 (m, 1H, C(5)H) ; 4,71 (m,1H, NCH); 5,0 (m, 2H, OCH₂Bn) ; 7,15-7,66 (m, 19H, arom). ³¹P 39.61 (0,96 P; 2S diastéréoisomère) et 39,87 (0,04 P; 2R diastéréoisomère).

### Acide_(2S)-2-[[[(1R)-1-(benzyloxycarbonylamino)ethyl]-hydroxy-phosphoryl]methyl]-3-(4-phenylphenyl)propanoique (Composé C-a)

NaOH 1N (2,77 mL ; 1 équivalent) a été ajouté à une suspension du composé (B) (1,5 g ; 2,77 mmol) dans EtOH (22,5 mL ; 15 volumes) et H₂O (18 mL ; 12 volumes) refroidie dans un bain de glace (le pH est surveillé à titre d'information, <11). Le mélange a été agité à température ambiante jusqu'à solubilisation complète. Du Pd/C 10% (0,15 g ; 10% en poids par rapport au composé (B) et 50% humide) a été ajouté. Le mélange réactionnel a été purgé avec N₂ puis H₂ (3 cycles vac / N₂ puis 3 cycles vac / H₂) et agité pendant 18 h à 20-30°C, sous 1 bar de H₂. Le pH est enregistré pour information (pH de l'ordre 7-8). Le mélange réactionnel est filtré sur 0,45 µm puis partiellement concentré pour éliminer l'EtOH. NaOH 1N (2,77 mL ; 1 équiv, pH> 10) puis CbzCl (0,472 g ; 1 équiv) puis NaOH 1N (2,77 mL ; 1 équiv) sont ajoutés et le mélange est agité 2h à température ambiante. La réaction est quantitative par HPLC, le composé après lavage acido-basique est utilisé tel quel pour l'étape suivante (0 ,975 g ; rendement : 73% ; (2S/2R) = 95/5).

RMN (DMSO D6 +TFA) ¹H (400 MHz) d 1,21 (dd, 3H, C(2)-CH₃), 1,75 et 1,98 (2 m, 1H+1H, C(4)H₂); 2,89-3,02 (m, 3H, C(5)H et C(5)-CH₂); 3,76 (m, 1H, C(2)H); 5,03 (m, 2H, OCH₂Bn); 7,25-7,63 (m, 15H, arom et NH). ³¹P 45,04 (0,05 P, 2R diastéréoisomère) et 45.70 (0.95 P, 2S diastéréoisomère).

### Acide [(1R)-1-(benzyloxycarbonylamino)ethyl]-[(2S)-3-[[(1S)-2-tert-butoxy-1-methyl-2-oxo-ethyl]amino]-3-oxo-2-r(4-phenylphenyl)methyl]propyl]phosphinique (Composé D-a)

1,685 kg du composé (C-a) dans 8,4 L de DMF sont agités à température ambiante (20 ~ 25 °C) jusqu'à obtenir une solution limpide puis 763 g (4,2 moles) de H-Ala-OtBu.HCl et 3372 g (10,5 moles) de TBTU sont ajoutés à température ambiante. Le mélange est refroidi à ~ 5 °C et 2263 g (17,5 mol) de DIEPA sont ajoutés, tout en maintenant la température à 5 ~ 10 °C. Après addition, le mélange est agité à 5 ~ 10 °C pendant 45 min. 8,4 L d'acétate d'éthyle sont ajoutés à 5°C ainsi que 10 L d'une solution aqueuse de HCl 1N. Le mélange est agité à température ambiante pendant 10 min. La phase aqueuse est extraite avec de l'acétate d'éthyle (1 × 8,4 L) et les phases organiques sont combinées et lavées par une solution aqueuse NaHCO₃ 10% (3 x 6 L), 3L d'une solution HCl 1N et 3L de saumure. Le produit, précipité dans la phase organique est chauffé à 45 ~ 50 °C sous agitation dans 8 L d'acétate d'éthyle jusqu'à l'obtention d'une solution limpide. Après refroidissement de celle-ci, le bon diastéréoisomère est obtenu sous forme d'un solide blanc par précipitation successive (1,314 kg) (Rdt : 62% ; 100% de pureté par HPLC).

RMN (DMSO D6 + TFA): ¹H (400 MHz) d 1,17 (m, C(2)CH₃, 3H); 1,22 (d, 3H, C(8)H₃); 1,36 (s, 9H, tBu); 1,61 et 1,93 (2 m, 1H+1H, C(4)H₂); 2,79 (m, 1H, C(5)H); 2,98 (m, 2H, C(5)CH₂); 3,72 (m, 1H, C(2)H); 4,11 (m, 1H, C(8)H); 5,01 (m, 2H, OCH₂Bn); 7,25-7,63 (m, 15H, arom et N(1)H) et 8.29 (d, 1H, N(7)H). ³¹P 45.95 (0,96 P, 2S diastéréoisomère) et 46,22 (0,04 P, 2R diastéréoisomère).

### Acide ((2S)-3-([1,1'-biphenyl]-4-yl)-2-((((R)-1-aminoethyl)(hydroxy)phosphoryl)methyl) propanoyl)-L-alanine (Composé E (PL254.HBr))

1250 g (2,054 moles) du composé (D-a) sont mélangés sous flux d'azote dans 2,5L d'acide acétique. Le mélange est agité à température ambiante (15 ∼ 20 °C) jusqu'à ce que tout le solide soit dissous, puis est refroidi à 10 ∼ 15 °C et 2,99 kg (33%, 12,32 moles de HBr) d'une solution de HBr dans de l'acide acétique sont ajouté lentement tout en maintenant la température à 16 ∼ 20 °C. Après l'addition pendant 5 h, tout en surveillant l'avancement de la réaction par HPLC, le mélange est concentré à 18 ∼ 20 °C sous vide pour éliminer environ 400 ∼ 500 mL d'acide acétique et 6 L d'acétate d'éthyle sont ajoutés. Le mélange est agité à température ambiante (15 ∼ 20 °C) pendant 30 min puis est filtré pour isoler le produit solide. Celui-ci est lavé avec de l'acétate d'éthyle (3 x 2L) et de l'éther diisopropylique (1 × 3L) puis est séché à 35 °C la nuit sous flux d'air pour donner 950 g de produit solide (Rdt : 92,7% ; pureté HPLC : 99,5%)

RMN (DMSO D6 + TFA) : ¹H (400 MHz) d 1,22 (dd, 3H, C(2)CH₃) ; 1,30 (d, 3H, C(8)H₃) ; 1,64 et 2,19 (2 m, 1H+1H, C(4)H₂) ; 2,74 (m, 1H, C(5)H) ; 3,06 (m, 2H, C(5)CH₂) ; 3,26 (m, 1H, C(2)H) ; 4,23 (m, 1H, C(8)H) ; 7,36 (m, 3H, arom) ; 7,45 (m, 2H, arom) ; 7,60 (d, 2H, arom) ; 7,66 (d, 2H, arom) ; 7,70 (m, 9H, arom) ; 8,07 (br s, 3H, N(1)H₃⁺) et 8,53 (d, 1H, N(9)H). ³¹P 41,51 (0.98 P, 2S diastéréoisomère) et 42,13 (0.02 P, 2R diastéréoisomère).

HPLC pureté (254 nm, Kromasil C18, 250 mm x 4,6 mm, 5µm) H₂O (0,01 % TFA) - CH₃CN (0,01 % TFA) 90/10 pendant 2 min, puis 10/90 en 14 min et 10/90 pendant 4 min : 99,5% ; t_{R} 10,31 et 11,25 min.

### Acide (2S)-2-[[[(1R)-1-(tert-butoxycarbonylamino)ethyl]-hydroxy-phosphoryl]methyl]-3-(4-phenylphenyl)propanoique (Composé C-b)

NaOH 1N (2,2 mL ; 1 équivalent) est additionné à une suspension du composé (B) (1 g ; 2,21 mmol ; 2R/2S 4/96) dans l'EtOH (15 mL, 15 vol) et H₂O (12 mL, 12 vol) refroidi dans un bain de glace. Le mélange est agité à température ambiante jusqu'à solubilisation complète. Du Pd/C 10% (0,15 g ; 10% en poids par rapport au composé (B) et 50% humide) a été ajouté. Le mélange réactionnel a été purgé avec N₂ puis H₂ (3 cycles vac / N₂ puis 3 cycles vac / H₂) et agité pendant 18 h à 20-30°C, sous 1 bar de H₂. Le pH est enregistré pour information (pH de l'ordre 7-8). Le mélange réactionnel est filtré sur 0,45 µm. NaOH 1N (2,2 mL, 1 equiv), Boc₂O (0,5 g, 1 equiv) puis NaOH 1N (2,2 mL, 1 equiv) sont ajoutés successivement. Le mélange est agité 2h à température ambiante puis est concentré partiellement pour éliminer EtOH. La phase aqueuse est traitée par HCl 1N jusqu'à pH <1 (0,655 g ; 3 equiv). La suspension est traitée avec iBuOAc (1,28 g ; 5 équivalent) et mélange pendant 2h pour donner le solide. Le solide est filté puis séché sous pression réduite pour donner le composé (C-b) (0,837 g, 84%).

RMN (DMSO D6+TFA): ¹H (400 MHz) d 1,17 (m, 3H, C(2)-CH₃); 1,36 (s, 9H, tBu); 1,71 et 1,97 (2m, 1H+1H, C(4)H₂); 2,9-3,1 (m, 3H, C(5)H et C(5)-CH₂); 3,70 (m, 1H, C(2)H); 7,01 (d, 1H, NH); 7,27 (d, 2H, arom); 7,34 (m, 1H, arom); 7,45 (m, 2H, arom); 7,57 (d, 2H, arom) et 7.64 (d, 2H, arom). ³¹P 46,4 (2S seul diastéréoisomère détecté).

### Acide [(1R)-1-(tert-butoxycarbonylamino)ethyl]-[(2S)-3-[[(1S)-2-tert-butoxy-1-methyl-2-oxo-ethyl]amino]-3-oxo-2-[(4-phenylphenyl)methyl]propyl]phosphinique (Composé D-b)

TBTU (0,862 g ; 3 equiv) puis DIPEA (0,578 g, 5 equiv) sont ajoutés successivement au composé (C-b) (0,4 g ; 0,895 mmol) et au sel HCl.AlaOtBu (0,195 g; 1,2 equiv) dans le DMF (2 mL, 5 vol) à 0°C. Le mélange réactionnel est agité pendant 1h puis AcOEt (5 mL, 10 vol) et HCl 1N (2,55 mL ; 2,85 equiv) sont ajoutés et le mélange est laissé revenir à température ambiante. La phase aqueuse est extraite avec iBuOAc (2 x 2 mL, 2 x 5 vol). Les phases organiques sont rassemblées et lavées par 10% NaHCO₃ (3 x 2 mL, 3 x 5 vol), HCl 1N (2 mL, 5 vol) et 10% NaCl (2 mL, 5 vol) puis concentrées et séchées sous pression réduite pour donner le composé (D-b) sous forme d'un solide (0,356 g ; 0,62 mmol ; 69%).

RMN (DMSO D6 + TFA): ¹H (400 MHz) d 1,13 (m, C(2)CH₃, 3H); 1,23 (d, 3H, C(8)H₃); 1,36 (br s,18H, 2 x tBu); 1,59 et 1,91 (2 m, 1H+1H, C(4)H₂); 2,8 (m, 1H, C(5)H); 3,0 (m, 2H, C(5)CH₂); 3,65 (m, 1H, C(2)H); 4,11 (m, 1H, C(8)H); 6,80 (d, 1H, N(1)H); 7,31 et 7,34 (m, 3H, arom) ; 7,45 (m, 2H, arom) ; 7,54 (d, 2H, arom) ; 7,62 (d, 2H, arom) et 8.30 (d, 1H, N(7)H). ³¹P 46.5 (2S seul diastéréoisomère détecté).

### Acide ((2S)-3-([1,1'-biphenyl-4-yl)-2-((((R)-1-aminoethyl)(hydroxy)phosphoryl)methyl) propanoyl)-L-alanine (Composé E (PL254))

HCO₂H 88% (1 mL, 12 volumes) est ajouté au composé (D-b) (85 mg ; 0,148 mmol). La solution est chauffée à 50°C sous agitation pendant 2h puis concentrée pour donner une huile qui est triturée dans MTBE (2 mL, 24 volumes). Le produit est filtré puis séché sous pression réduite pour donner le composé (E) (58 mg, 94%).

RMN (DMSO D6 + TFA) : ¹H (400 MHz) d 1,22 (dd, 3H, C(2)CH₃) ; 1,30 (dd, 3H, C(8)H₃) ; 1,64 et 2,18 (2 m, 1H+1H, C(4)H₂) ; 2,73 (m, 1H, C(5)H) ; 3,06 (m, 2H, C(5)CH₂) ; 3,25 (m, 1H, C(2)H) ; 4,23 (m, 1H, C(8)H) ; 7,30-7,70 (m, 9H, arom) ; 8.08 (br s, 3H, N(1)H₃⁺) et 8,52 (d, 1H, N(9)H). ³¹P 41,2 (2S 1 seul diastéréoisomère détecté).

HPLC pureté (254 nm, Kromasil C18, 250 mm x 4,6 mm, 5µm) H₂O (0,01 % TFA) - CH₃CN (0,01 % TFA) 90/10 pendant 2 min, puis 10/90 en 14 min et 10/90 pendant 4 min : 97,70% ; t_{R} : 10,29 min.

### Synthèse du composé (E) par enrichissement successif lors des différentes étapes

En partant d'un composé (B) « brut » (2S/2R) 57/43, issu par exemple de l'étape (2b.2.1) telle que décrite ci-dessus, il a été montré qu'il était possible d'enrichir dans le diastéréoisomère désiré lors des différentes étapes.

### Composé (B) (2S/2R : 81/19)

Le composé (B) « brut » (2S/2R) 57/43 est mis en suspension dans de l'iBuOAc (50 mL, 5 volumes) et de l'eau (50 mL, 5 volumes) et est agité pendant 2 heures. La suspension est filtrée pour donner un gâteau humide (12 g). Le solide est traité avec de l'acétone (50 mL, 5 volumes) et mis en suspension pendant quelques minutes sur le filtre, puis filtré, séché sous vide pour donner le mauvais diastéréoisomère (1R, 2R) (1,26 g, rendement 24%, rapport 2R/2S ³¹P 79/21). Le filtrat est concentré à sec pour donner le bon diastéréoisomère (B) sous forme solide (3,18 g, rendement 60%, (2S/2R) : 81/19).

RMN D6 DMSO + TFA, ³¹P 39,37 (0,81 P, diastéréoisomère 2S) et 39,60 (0,19 P, diastéréoisomère 2R).

### Composé (C-b) (2S/2R : 9317)

NaOH 1N (4,43 mL ; 1 équivalent) est additionné à une suspension du composé (B) (2 g ; 4,43 mmol ; 2S/2R 81/19), précédemment obtenu, dans l'EtOH (30 mL, 15 vol) et H₂O (15 mL, 7,5 vol) refroidi dans un bain de glace. Le mélange est agité à température ambiante jusqu'à solubilisation complète. Du Pd/C 10% (0,20 g ; 10% en poids par rapport au composé (B) et 50% humide) a été ajouté. Le mélange réactionnel a été purgé avec N₂ puis H₂ (3 cycles vac / N₂ puis 3 cycles vac / H₂) et agité pendant 18 h à 20-30°C, sous 1 bar de H₂. Le pH est enregistré pour information (pH de l'ordre 7-8). Le mélange réactionnel est filtré sur 0,45 µm. NaOH 1N (4,4 mL, 1 equiv), Boc₂O (1,05 g, 1 equiv) puis NaOH 1N (4,4 mL, 1 equiv) sont ajoutés successivement. Le mélange est agité 2h à température ambiante puis est concentré partiellement pour éliminer EtOH. La phase aqueuse est lavée avec du MTBE (10 mL, 5 volumes puis avec du HCl IN (1,75 mL, 4 équivalents). La phase organique est séparée et concentrée à sec pour donner un solide. Celui-ci est mis en suspension dans du MTBE (10 mL, 5 volumes) et de l'H₂O (0,24 mL, 3 volumes) pendant 1 heure. La suspension est filtrée puis séchée sous vide pour donner le composé (C-b) (1,05 g, rendement 53%, 2S/2R = 93/7). RMN D6 DMSO + TFA, 31P 46,20 (diastéréoisomère 2R ; 0,07P) et 46,37 (diastéréoisomère 2S ; 0,93P).

### Composé (D-b) (2S/2R 9218)

TBTU (1,96 g ; 3 equiv) puis DIPEA (1,316 g, 5 equiv) sont ajoutés successivement au composé (C-b) (0,91 g ; 2,04 mmol) précédemment obtenu et au sel HCl.AlaOtBu (0,44 g; 1,2 equiv) dans le DMF (5 mL, 5 volumes) à 0°C. Le mélange réactionnel est agité pendant 1h puis EtOAc (5 mL, 5 volumes) et HCl 1N (6 mL ; 3 equiv) sont ajoutés et le mélange est laissé revenir à température ambiante. La phase aqueuse est extraite avec de l'EtOAc (4 mL, 2 volumes). Les phases organiques sont combinées puis lavées avec du NaHCOs à 10% (3 x 4 mL, 3 x 2 volumes), du HCl 1N (4 mL, 2 volumes) et du NaCl à 10% (4 mL, 2 volumes). La solution est concentrée et séchée sous vide pour donner le composé (C-b) sous forme de solide (1,058 g, 1,84 mmol, rendement 90%, 2S/2R = 92/8). RMN D6 DMSO + TFA, ³¹P 46,56 (0,92 P, diastéréoisomère 2S) et 46,88 (0,08 P, diastéréoisomère 2R).

### Composé (E) (2S/2R 9317)

HCO₂H 88% (5 mL, 12 volumes) est ajouté au composé (D-b) précédemment obtenu (1,06 ; 1,84 mmol). La solution est chauffée à 50°C sous agitation pendant 2h puis concentrée pour donner une huile qui est triturée dans MTBE (8 mL, 8 volumes). Le mélange est concentré et séché sous vide pour donner le composé (E) (0,62 g, rendement 80%, (2S/2R) : 93/7).

RMN D6 DMSO + TFA, ³¹P 41,33 (diastéréoisomère 2S ; 0,93P) et 41,97 (diastéréoisomère 2R ; 0,07P)

Lorsque le composé (E) (0,5 g) est mis en suspension dans du CH₂Cl₂ (4 mL, 8 volumes) et agité pendant 1 heure. La suspension mince est filtrée et séchée sous vide pour donner le composé (E) (0,45 mg, rendement 72%, (2S/2R) : 94/6).

HPLC (254 nm, Kromasil C18, 250 mm x 4,6 mm, 5µm) H₂O (0,01 % TFA) - CH₃CN (0,01 % TFA) 90/10 pendant 2 min, puis 10/90 en 14 min et 10/90 pendant 4 min) pureté 98.2% ; t_{R} : 10.31 min.

### Acide ((2S)-3-([1,1'-biphenyl]-4-yl)-2-((hydroxy((1R)-1-(((1-(isobutyryloxy)ethoxy) carbonyl)amino)ethyl)phosphoryl)methyl)propanoyl)-L-alanine (composé F)

900 g (1,8 mole) du composé (E) sont solubilisés dans 2,7L de DMF et le mélange est agité à la température ambiante (15 ∼ 20 °C) jusqu'à obtenir une solution limpide. Celui-ci est ensuite refroidi à 5 ∼ 10 °C et 492,4 g (1,8 mole) d'acyloxyalkyle carbamate sont ajoutés en une portion et le mélange est agité à 5 ∼ 10 °C jusqu'à obtenir une solution limpide. 382,3 g (3,79 moles) de triéthylamine sont ajoutés lentement, tout en maintenant la température inférieure à 15 °C. Après addition, le mélange est agité à 15 ∼ 20 °C pendant 4 h, tout en suivant la réaction par HPLC. 4,5 L d'acétate d'éthyle sont ajoutés et le mélange est refroidi à 5 ∼ 10°C pour ajouter une solution aqueuse de HCl 1N, pour ajuster le pH à 2 à 3 lentement, tout en maintenant la température inférieure à 25 °C (remarque : environ 2,2 L d'une solution aqueuse de HCl 1N ont été utilisées). 3,2 L d'eau sont ajoutés et le mélange est agité température ambiante pendant 10 min. La phase organique du produit est séparée et la phase aqueuse est extraite avec de l'acétate d'éthyle (1 × 4,5 L). Les phases organiques sont mélangées et lavées avec de l'eau (4 × 3,6 L) et de la saumure (1 × 3,6 L). La phase organique est concentrée à 40 ∼ 45 °C sous pression réduite, pour éliminer environ 90% de l'acétate d'éthyle. 2,7 L d'acétate d'éthyle sont ajoutés dans le résidu et le mélange est agité à 45 ∼ 50 °C pendant 30 min. Le mélange est concentré à 40 ∼ 45 °C sous vide pour éliminer environ 80% de l'acétate d'éthyle. 2,7 litres d'éther diisopropylique sont ajoutés dans le résidu et le mélange est continué à être concentré pour chasser l'acétate d'éthyle restant. 9 L d'éther diisopropylique sont alors ajouté et agiter le mélange à la température ambiante (∼ 20 °C) pendant 1h. Le produit solide est isolé et est séché la nuit à 30 ∼ 35 °C sous flux d'air pour donner 925 g du composé (F), sous forme de solide jaune clair (pureté HPLC 98,1%).

### Double sel de sodium de l'acide ((2S)-3-([1,1'-biphenyl]-4-yl)-2-((hydroxy((1R)-1-(((1-(isobutyryloxy)ethoxy)carbonyl)amino)ethyl)phosphoryl)methyl) propanoyl)-L-alanine (composé (I))

136,27 g (0,24 mole) du composé (F) sont solubilisés dans 683 mL de THF et le mélange est agité température ambiante (15 ∼ 25 °C) jusqu'à obtenir une solution limpide. 137 mL d'eau sont ajoutés à la solution qui est ensuite filtrée à température ambiante (15 ∼ 25°C) sous N₂ puis l'hydrogenocarbonate de sodium (39,71g) est ajouté à température ambiante (15 ∼ 25 °C). Le mélange est agité à température ambiante (15 ∼ 25 °C) pendant au moins 30 min, jusqu'à disparition du dégagement gazeux. La solution est concentrée sous pression réduite à 20 ∼ 25 °C. Une opération de dilution par 1,0 L de THF du résidu puis concentration à 20 ∼ 25 °C sous pression réduite est réalisée plusieurs fois pour éliminer l'eau. 1,4 L d'éther diisopropylique sont ajoutés au résidu. La suspension est agitée sous agitation mécanique à 15 ∼ 25 °C durant 1h puis le solide obtenu est filtré, lavé puis séché pour donner 133,9 g du composé (I), sous forme d'un solide blanc cassé (Rdt : 91% ; pureté HPLC : 98,6%).

## Revendications

1. Procédé de préparation industrielle de l'acide ((2S)-3-([1,1'-biphenyl]-4-yl)-2-((((R)-1-aminoethyl)(hydroxy)phosphoryl)methyl)propanoyl)-L-alanine de formule (E) suivante : 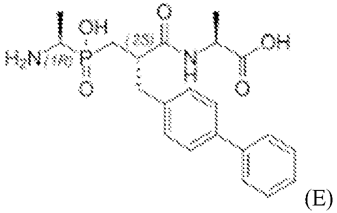 comprenant les étapes suivantes :
(1) préparation du composé de formule (A) suivante : 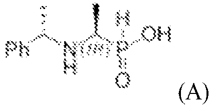 par :
(1a) réaction de la (S)-1-phényléthylamine dans un solvant polaire et protique avec une solution aqueuse d'acide hypophosphoreux H₃PO₂ et de l'acétaldéhyde en présence d'un équivalent molaire d'acide chlorhydrique par rapport à la (S)-1-phényléthylamine, puis
(1b) traitement du sel résultant de l'étape (1a) avec l'oxyde de propylène, puis
(1c) cristallisation à l'aide d'un solvant polaire et protique et récupération du composé de formule (A) par filtration,
(2) préparation du composé de formule (B) suivante : 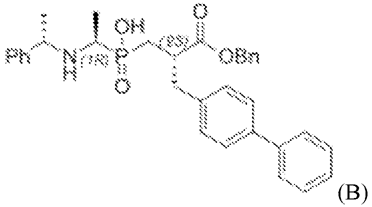 par :
(2a) réaction du composé de formule (A) issu de l'étape (1) avec l'ester benzylique du (2-(4-biphényl)méthyl)acrylate en présence d'une source de groupements triméthylsilyles, puis
(2b) récupération du composé de formule (B) par :
(2b.1) cristallisation à l'aide d'un mélange de solvant aprotique apolaire et d'eau puis filtration, ou
(2b.2) trituration dans l'acétone, filtration et évaporation du filtrat,
(3) préparation du composé de formule (C) suivante : 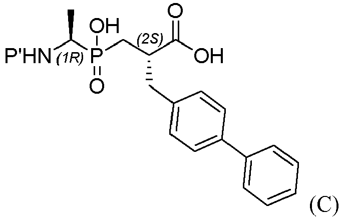 dans laquelle P' est un groupement protecteur de la fonction amine,
par :
(3a) hydrogénolyse du composé de formule (B) sous atmosphère d'hydrogène en présence de 10% en poids de Pd/C par rapport au poids du composé de formule (B), puis
(3b) protection de l'amine résultante de l'étape (3a) avec un groupement protecteur P' et récupération du composé de formule (C),
(4) préparation du composé de formule (E) par
(4a) couplage peptique du composé de formule (C) avec l'ester tert-butylique de la (L)-alanine et récupération du composé de formule (D) suivante : 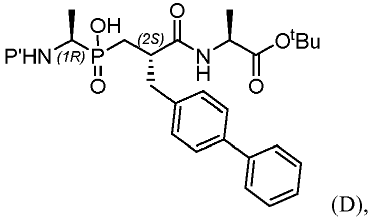
(4b) déprotection du groupement protecteur P' en position N-terminale et du groupement tert-butyle en position C-terminale et récupération du composé de formule (E).

2. Procédé selon la revendication 1, **caractérisé en ce que** dans les étapes (1a) et (1c), le solvant protique et polaire est choisi parmi les alcools, de préférence il s'agit de l'éthanol.

3. Procédé selon l'une quelconque des revendications 1 ou 2, **caractérisé en ce que** dans l'étape (2b) le solvant aprotique apolaire est le MTBE.

4. Procédé selon l'une quelconque des revendications 1 à 3, **caractérisé en ce que** l'étape (3a) comprend les étapes successives suivantes :
(3a.1) préparation d'une suspension comprenant le composé de formule (B) dans un solvant protique ou un mélange de solvants protiques,
(3a.2) ajout d'une base dans la suspension préparée à l'étape (3a.1),
(3a.3) ajout à la suspension résultante de l'étape (3a.2) de 10% en poids de Pd/C par rapport au poids du composé de formule (B) et purge du milieu réactionnel résultant avec H₂,
(3a.4) filtration et concentration du milieu réactionnel.

5. Procédé selon l'une quelconque des revendications 1 à 4, **caractérisé en ce que** l'étape de protection (3b) est réalisée en milieu basique, de préférence par ajout d'une base forte telle que NaOH, LiOH, KOH, Ba(OH)₂, Ca(OH)₂ et CsOH.

6. Procédé selon la revendication 5, **caractérisé en ce que** P' est choisi parmi le groupe constitué des groupements CBz et Boc.

7. Procédé selon l'une quelconque des revendications 1 à 6, **caractérisé en ce que** l'étape (4a) comprend les étapes successives suivantes :
(4a.1) ajout de l'ester tert-butylique de la (L)-alanine et d'un agent de couplage peptidique à une solution comprenant le composé de formule (C) dissout dans le DMF ou dans un mélange THF/DMF,
(4a.2) ajout d'une base au milieu réactionnel résultant de l'étape (4a.1),
(4a.3) récupération du composé de formule (D) telle que définie dans la revendication 1.

8. Procédé de préparation industrielle du sel disodique de ((2S)-3-([1,1'-biphenyl]-4-yl)-2-((hydroxy((1R)-1-(((1-(isobutyryloxy)ethoxy)carbonyl)amino)ethyl)phosphoryl)methyl) propanoyl)-L-alanine de formule (I) suivante: 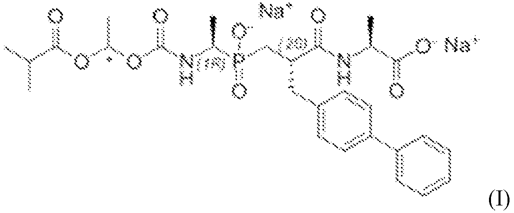 comprenant les étapes (1) à (4) telles que définies selon l'une quelconque des revendications 1 à 7 et, directement à la suite de l'étape (4), les étapes successives (5) et (6) suivantes :
(5) préparation du composé de formule (F) suivante : 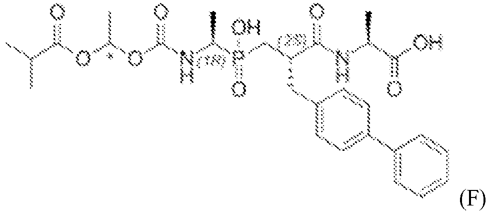 par réaction du composé de formule (E) avec le *N*-hydroxysuccinimide d'acyloxyalkyle en présence d'une base,
(6) récupération du composé de formule (I) par précipitation dans un solvant aprotique apolaire en présence d'un sel sodique de base faible.

9. Procédé selon la revendication 8, **caractérisé en ce que** l'étape (5) comprend les étapes successives suivantes :
(5a) réaction du composé de formule (E) avec le *N*-hydroxysuccinimide d'acyloxyalkyle en présence d'une base dans un solvant aprotique polaire,
(5b) cristallisation à l'aide d'un solvant apolaire aprotique et récupération du composé de formule (F) par filtration.

10. Composé de formule (B) suivante :

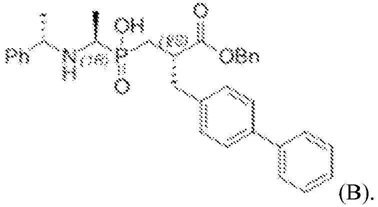

## Patentansprüche

1. Verfahren zur industriellen Herstellung von ((2S)-3-([1,1'-Biphenyl]-4-yl)-2-((((R)-1-aminoethyl)(hydroxy)phosphoryl)methyl)propanoyl)-L-Alanin-Säure mit folgender Formel (E): 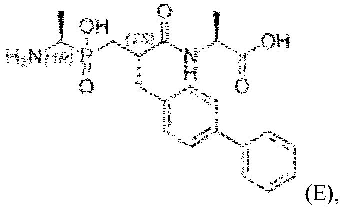 das die folgenden Schritte umfasst:
(1) Herstellung der Verbindung mit folgender Formel (A): 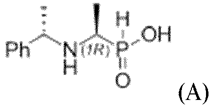 durch:
(1a) Reaktion von (S)-1-Phenylethylamin in einem polaren und protischen Lösungsmittel mit einer wässrigen Lösung aus Phosphinsäure H₃PO₂ und Acetaldehyd in Gegenwart eines Moläquivalents Salzsäure, bezogen auf (S)-1-Phenylethylamin, anschließend
(1b) Behandlung des aus Schritt (1a) resultierenden Salzes mit Propylenoxid, dann
(1c) Kristallisation mithilfe eines polaren und protischen Lösungsmittels und Gewinnung der Verbindung mit Formel (A) durch Filtration,
(2) Herstellung der Verbindung mit folgender Formel (B): 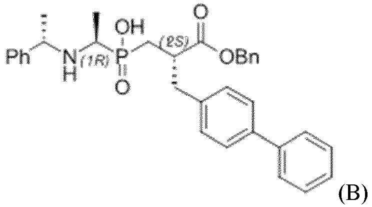 durch:
(2a) Reaktion der Verbindung mit Formel (A) aus Schritt (1) mit (2-(4-Biphenyl)methyl)acrylat-Benzylester in Gegenwart einer Quelle von TrimethylsilylGruppen, anschließend
(2b) Gewinnung der Verbindung mit Formel (B) durch:
(2b.1) Kristallisation mithilfe eines Gemischs aus apolarem aprotischem Lösungsmittel und Wasser und anschließender Filtration oder
(2b.2) Zermahlen in Aceton, Filtration und Verdampfung des Filtrats,
(3) Herstellung der Verbindung mit folgender Formel (C): 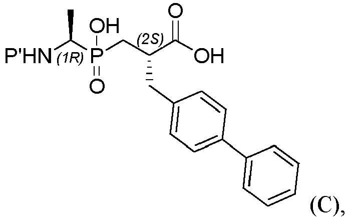 wobei es sich bei P' um eine Aminoschutzgruppe handelt,
durch:
(3a) Hydrogenolyse der Verbindung mit Formel (B) in einer Wasserstoffatmosphäre in Gegenwart von 10 Gewichtsprozent Pd/C, bezogen auf das Gewicht der Verbindung mit Formel (B), anschließend
(3b) Schutz des aus Schritt (3a) resultierenden Amins mit einer Schutzgruppe P' und Gewinnung der Verbindung mit Formel (C),
(4) Herstellung der Verbindung mit Formel (E) durch:
(4a) Peptidkupplung der Verbindung mit Formel (C) mit (L)-Alanin-tert-Butylester und Gewinnung der Verbindung mit folgender Formel (D): 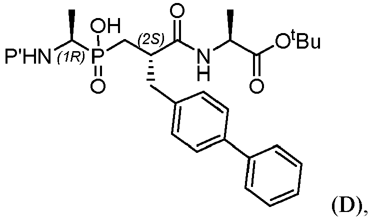
(4b) Entfernen der Schutzgruppe P' in *N* -terminaler Position und der *tert* -Butyl-Gruppe in C-terminaler Position und Gewinnung der Verbindung mit Formel (E).

2. Verfahren nach Anspruch 1, **dadurch gekennzeichnet, dass** in den Schritten (1a) und (1c) das protische und polare Lösungsmittel unter den Alkoholen ausgewählt wird, vorzugsweise handelt es sich um Ethanol.

3. Verfahren nach einem der Ansprüche 1 oder 2, **dadurch gekennzeichnet, dass** es sich in Schritt (2b) beim apolaren aprotischen Lösungsmittel um MTBE handelt.

4. Verfahren nach einem der Ansprüche 1 bis 3, **dadurch gekennzeichnet, dass** Schritt (3a) die folgenden aufeinanderfolgenden Schritte umfasst:
(3a.1) Herstellung einer Suspension, welche die Verbindung mit Formel (B) in einem protischen Lösungsmittel oder einem Gemisch aus protischen Lösungsmitteln enthält,
(3a.2) Zugabe einer Base zu der in Schritt (3a.1) hergestellten Suspension,
(3a.3) Zugabe von 10 Gewichtsprozent Pd/C, bezogen auf das Gewicht der Verbindung mit Formel (B), zu der aus Schritt (3a.2) resultierenden Suspension und Spülung des resultierenden Reaktionsmediums mit H₂,
(3a.4) Filtration und Konzentration des Reaktionsmediums.

5. Verfahren nach einem der Ansprüche 1 bis 4, **dadurch gekennzeichnet, dass** der Schutzschritt (3b) in einem basischen Medium erfolgt, vorzugsweise durch Zugabe einer starken Base wie NaOH, LiOH, KOH, Ba(OH)2, Ca(OH)₂ und CsOH.

6. Verfahren nach Anspruch 5, **dadurch gekennzeichnet, dass** P' aus der Gruppe gewählt wird, die aus den Gruppen CBz und Boc besteht.

7. Verfahren nach einem der Ansprüche 1 bis 6, **dadurch gekennzeichnet, dass** Schritt (4a) die folgenden aufeinanderfolgenden Schritte umfasst:
(4a.1) Zugabe von (L)-Alanin-tert-Butylester und eines Peptidkupplungsreagens zu einer Lösung, welche die in DMF oder in einem THF/DMF-Gemisch gelöste Verbindung mit Formel (C) enthält,
(4a.2) Zugabe einer Base zu dem aus Schritt (4a.1) resultierenden Reaktionsmilieu,
(4a.3) Gewinnung der Verbindung mit Formel (D) gemäß Definition in Anspruch 1.

8. Verfahren zur industriellen Herstellung von ((2S)-3-([1,1'-Biphenyl]-4-yl)-2-((hydroxy((1R)-1-(((isobutyryloxy)ethoxy)carbonyl)amino)ethyl)phosphoryl)methyl)propanoyl)-L-Alanin-Dinatriumsalz mit folgender Formel (I): 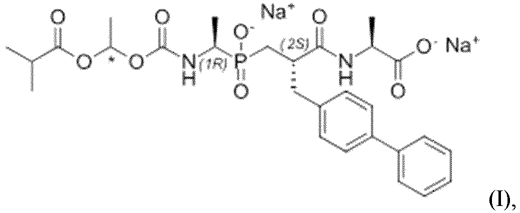 welches die Schritte (1) bis (4), wie nach einem der Ansprüche 1 bis 7 definiert, und unmittelbar nach Schritt (4) die folgenden aufeinanderfolgenden Schritte (5) und (6) umfasst:
(5) Herstellung der Verbindung mit folgender Formel (F): 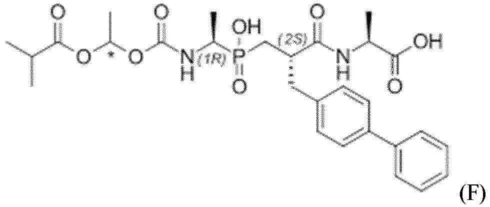 durch Reaktion der Verbindung mit Formel (E) mit dem Acyloxyalkyl-N-Hydroxysuccinimid in Gegenwart einer Base,
(6) Gewinnung der Verbindung mit Formel (I) durch Ausfällung in einem apolaren aprotischen Lösungsmittel in Gegenwart eines schwach basischen Natriumsalzes.

9. Verfahren nach Anspruch 8, **dadurch gekennzeichnet, dass** Schritt (5) die folgenden aufeinanderfolgenden Schritte umfasst:
(5a) Reaktion der Verbindung mit Formel (E) mit dem Acyloxyalkyl-N-Hydroxysuccinimid in Gegenwart einer Base in einem polaren aprotischen Lösungsmittel,
(5b) Kristallisation mithilfe eines aprotischen apolaren Lösungsmittels und Gewinnung der Verbindung mit Formel (F) durch Filtration.

10. Verbindung mit folgender Formel (B):

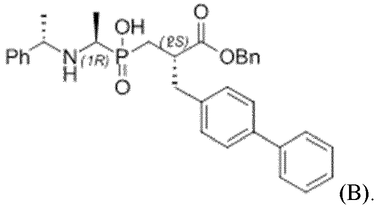

## Claims

1. A process for the industrial preparation of ((2S)-3-([1,1'-biphenyl]-4-yl)-2-((((R)-1-aminoethyl)(hydroxy)phosphoryl)methyl)propanoyl)-L-alanine acid of the following formula (E): 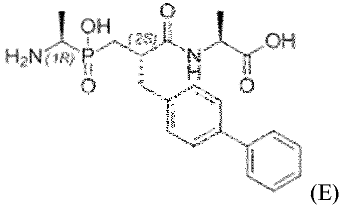 comprising the following steps of:
(1) preparing the compound of the following formula (A): 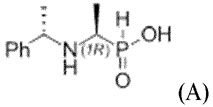 by:
(1a) reacting (S)-1-phenylethylamine in a polar and protic solvent with an aqueous solution of hypophosphorous acid H₃PO₂ and acetaldehyde in the presence of one molar equivalent of hydrochloric acid relative to (S)-1-phenylethylamine, then
(1b) treating the salt resulting from step (1a) with propylene oxide, then
(1c) crystallising using a polar and protic solvent and recovering the compound of the formula (A) by filtration,
(2) preparing the compound of the following formula (B): 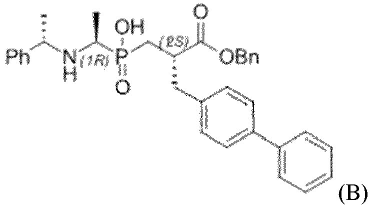 by:
(2a) reacting the compound of formula (A) resulting from step (1) with (2-(4-biphenyl)methyl)acrylate benzyl ester in the presence of a source of trimethylsilyl groups, then
(2b) recovering the compound of formula (B) by:
(2b.1) crystallising using a mixture of apolar aprotic solvent and water then filtering, or
(2b.2) triturating in acetone, filtering and evaporating the filtrate,
(3) preparing the compound of the following formula (C): 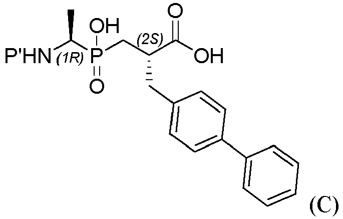 wherein P' is a protective group of an amine function,
by:
(3a) hydrogenolysing the compound of the formula (B) under hydrogen atmosphere in the presence of 10% by weight of Pd/C relative to the weight of the compound of the formula (B), then
(3b) protecting the amine resulting from step (3a) with a protective group P' and recovering the compound of formula (C),
(4) preparing the compound of formula (E) by
(4a) peptidic coupling of the compound of formula (C) with (L)-alanine tert-butyl ester and recovering the compound of the following formula (D): 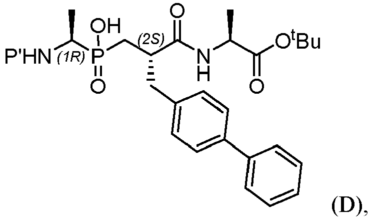
(4b) deprotecting the protective group P' in the N-terminal position and the *tert* -butyl group in the C-terminal position and recovering the compound of formula (E).

2. The process according to claim 1, **characterised in that** in steps (1a) and (1c), the protic and polar solvent is selected from alcohols, preferably it is ethanol.

3. The process according to any of claims 1 or 2, **characterised in that** in step (2b) the apolar aprotic solvent is MTBE.

4. The process according to any of claims 1 to 3, **characterised in that** step (3a) comprises the following successive steps of:
(3a.1) preparing a suspension comprising the compound of formula (B) in a protic solvent or a mixture of protic solvents,
(3a2) adding a base to the suspension prepared in step (3a. 1),
(3a.3) adding to the suspension resulting from step (3a.2) 10% by weight of Pd/C relative to the weight of the compound of formula (B) and purging the resulting reaction medium with H₂,
(3a.4) filtering and concentrating the reaction medium.

5. The process according to any of claims 1 to 4, **characterised in that** the protection step (3b) is carried out in a basic medium, preferably by adding a strong base such as NaOH, LiOH, KOH, Ba(OH)₂, Ca(OH)₂ and CsOH.

6. The process according to claim 5, **characterised in that** P' is selected from the group consisting of CBz and Boc groups.

7. The process according to any of claims 1 to 6, **characterised in that** step (4a) comprises the following successive steps of:
(4a.1) adding (L)-alanine *tert*-butyl ester and a peptide coupling agent to a solution comprising the compound of formula (C) dissolved in DMF or in a THF/DMF mixture,
(4a2) adding a base to the reaction medium resulting from step (4a.1), (4a.3) recovering the compound of formula (D) as defined in claim 1.

8. A process for the industrial preparation of ((2S)-3-([1,1'-biphenyl]-4-yl)-2- ((hydroxy((1R)-1-(((1-(isobutyryloxy)ethoxy)carbonyl)amino)ethyl)phosphoryl)methyl)propanoyl)-L-alanine disodium salt of the following formula (I): 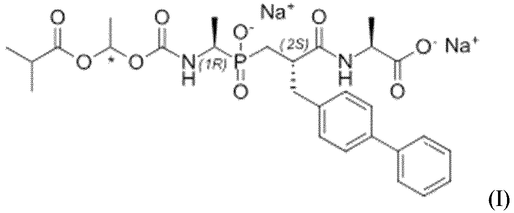 comprising steps (1) to (4) as defined in any one of claims 1 to 7 and, directly following step (4), the following successive steps (5) and (6):
(5) preparing the compound of the following formula (F): 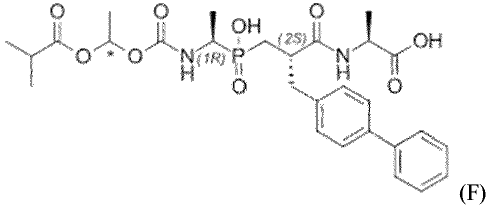 by reacting the compound of formula (E) with acyloxyalkyl N-hydroxysuccinimide in the presence of a base,
(6) recovering the compound of formula (I) by precipitation in a non-polar aprotic solvent in the presence of a weak base sodium salt.

9. The process according to claim 8, **characterised in that** step (5) comprises the following successive steps of:
(5a) reacting the compound of formula (E) with acyloxyalkyl N-hydroxysuccinimide in the presence of a base in a polar aprotic solvent,
(5b) crystallising using a non-polar aprotic solvent and recovering the compound of formula (F) by filtration.

10. Compound of the following formula (B):
